(19) Europäisches Patentamt
European Patent Office
Office européen des brevets

(11) **EP 3 618 463 A1**

(12) **EUROPEAN PATENT APPLICATION**
published in accordance with Art. 153(4) EPC


(43) Date of publication:
**04.03.2020 Bulletin 2020/10**

(21) Application number: **18792058.2**

(22) Date of filing: **11.04.2018**

(51) Int Cl.:
***H04S 7/00*** *(2006.01)* ***G10L 19/00*** *(2013.01)*
***G10L 19/008*** *(2013.01)* ***H04R 3/00*** *(2006.01)*

(86) International application number:
**PCT/JP2018/015158**

(87) International publication number:
**WO 2018/198767 (01.11.2018 Gazette 2018/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.04.2017 JP 2017085907**



(71) Applicant: **Sony Corporation**
**Tokyo 108-0075 (JP)**

(72) Inventors:
- **YAMAMOTO, Yuki**
  **Tokyo 108-0075 (JP)**
- **CHINEN, Toru**
  **Tokyo 108-0075 (JP)**
- **TSUJI, Minoru**
  **Tokyo 108-0075 (JP)**

(74) Representative: **2SPL Patentanwälte PartG mbB**
**Postfach 15 17 23**
**80050 München (DE)**


(54) **SIGNAL PROCESSING DEVICE, METHOD, AND PROGRAM**


(57) The present technology relates to a signal processing device and method, and a program making it possible to obtain appropriate spread information more easily.

A signal processing device includes: a spread information generation unit configured to generate spread information in a frame to be processed of an audio object, on the basis of object position information in the frame to be processed of the audio object and any of spread information in an other frame different from the frame to be processed of the audio object, zoom information, and size information about the audio object. The present technology may be applied to an encoding device and a decoding device.


*FIG. 2*

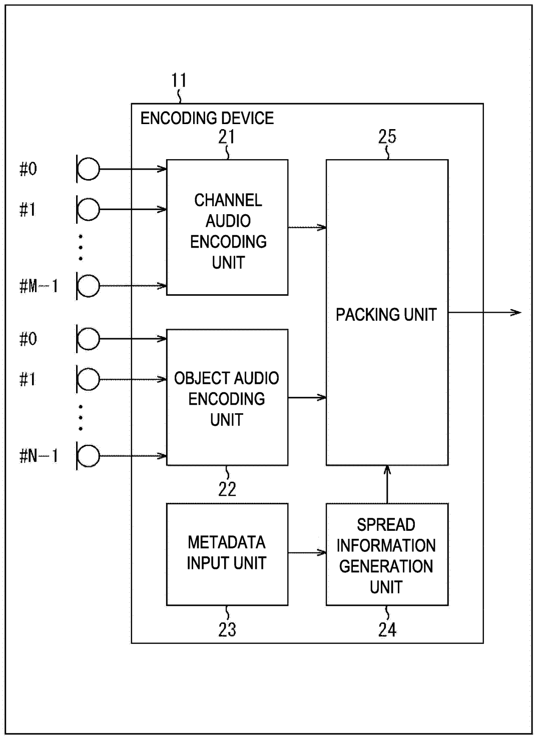


EP 3 618 463 A1

## Description

TECHNICAL FIELD

The present technology relates to a signal processing device and method, and a program, and more particularly, to a signal processing device and method, and a program making it possible to obtain appropriate spread information more easily.

BACKGROUND ART

In the related art, for example, the international standard moving picture experts group (MPEG)-H Part 3: 3D audio standard or the like is known as an encoding scheme that can handle object audio (for example, see Non-Patent Document 1).

In such an encoding scheme, a spread process that spreads out the sound image of the sound of an audio object can be performed.

Specifically, on the encoding device side, object position information indicating the position of an audio object together with spread information indicating the degree of spread of the sound image of the sound of the audio object are included in the bitstream as metadata of the audio object.

For example, in the case in which the sound image of the sound of an audio object is to be spread out symmetrically in the horizontal direction and the vertical direction, the spread information contains a single value indicating any angle in a range from 0 degrees to 180 degrees (hereinafter also referred to as the spread angle) that indicates the degree of spread of the sound image in the horizontal direction and the vertical direction.

In contrast, in the case in which the sound image of the sound of the audio object is to be spread out asymmetrically in the horizontal direction and the vertical direction, the spread information contains two values indicating a spread angle in the horizontal direction and a spread angle in the vertical direction. Note that the spread angle in the horizontal direction and the spread angle in the vertical direction are both taken to be angles in a range from 0 degrees to 180 degrees.

Such spread information can take different values in each frame of the audio signal of the audio object.

Also, on the decoding device side, a rendering process that spreads the sound image of the audio object on the basis of the spread information extracted from the bitstream, or in other words a spread process, is performed. If such a spread process is performed, the region of the sound image of an object close by can be enlarged, while the region of the sound image of an object small and far away can be reduced, for example. As a result, content reproduction that feels more realistic can be achieved.

CITATION LIST

NON-PATENT DOCUMENT

Non-Patent Document 1: INTERNATIONAL STANDARD ISO/IEC 23008-3 First edition 2015-10-15 Information technology-High efficiency coding and media delivery in heterogeneous environments-Part 3: 3D audio

SUMMARY OF THE INVENTION

PROBLEMS TO BE SOLVED BY THE INVENTION

However, obtaining appropriate spread information is not easy.

For example, manually assigning spread information to every time (frame) and every audio object is costly. Also, depending on the situation, spread information may not even be assigned in some cases.

Furthermore, if a zooming process is performed by a user or the like on the decoding side for example, the size of the object on the screen changes, but the region of the sound image cannot be spread to an appropriate size if the spread information obtained from the bitstream is used as-is. In that case, the size of the object on the screen and the size of the region of the sound image of the audio object corresponding to the object will not be compatible with each other, and the feeling of realism will be impaired.

The present technology has been devised in light of such circumstances, and makes it possible to obtain appropriate spread information more easily.

## SOLUTIONS TO PROBLEMS

A signal processing device according to an aspect of the present technology includes: a spread information generation unit configured to generate spread information in a frame to be processed of an audio object, on the basis of object position information in the frame to be processed of the audio object and any of spread information in an other frame different from the frame to be processed of the audio object, zoom information, and size information about the audio object.

The spread information generation unit may generate the spread information in the frame to be processed on the basis of the spread information in the other frame of the audio object and the object position information in the frame to be processed as well as in the other frame of the audio object.

The object position information may be a distance from a reference position to the audio object.

The spread information generation unit may generate an inverse tangent of a product of a ratio of the distance in the frame to be processed and the distance in the other frame, and a tangent of the spread information in the other frame, as the spread information in the frame to be processed.

The spread information generation unit may generate the spread information in the frame to be processed of the audio object after zooming on the basis of the zoom information and the spread information in the frame to be processed of the audio object.

The spread information generation unit may generate the spread information in the frame to be processed of the audio object after zooming on the basis of position and size relationships between a virtual screen before zooming and a virtual screen after zooming determined by the zoom information.

The spread information generation unit may generate the spread information in the frame to be processed on the basis of the size information and the object position information in the frame to be processed of the audio object.

The size information may be a distance from a center to a shell of the audio object.

The object position information may be a distance from a reference position to the audio object.

The spread information generation unit may generate an inverse tangent of a ratio of the size information and the object position information in the frame to be processed as the spread information in the frame to be processed.

A signal processing method or a program according to an aspect of the present technology includes: a step of generating spread information in a frame to be processed of an audio object, on the basis of object position information in the frame to be processed of the audio object and any of spread information in an other frame different from the frame to be processed of the audio object, zoom information, and size information about the audio object.

In an aspect of the present technology, spread information in a frame to be processed of an audio object is generated, on the basis of object position information in the frame to be processed of the audio object and any of spread information in an other frame different from the frame to be processed of the audio object, zoom information, and size information about the audio object.

## EFFECTS OF THE INVENTION

According to an aspect of the present technology, appropriate spread information can be obtained more easily.

Note that the advantageous effects described here are not necessarily limitative, and any of the advantageous effects described in the present disclosure may be attained.

## BRIEF DESCRIPTION OF DRAWINGS

Fig. 1 is a diagram explaining the generation of spread information.
Fig. 2 is a diagram illustrating an exemplary configuration of an encoding device.
Fig. 3 is a flowchart explaining an encoding process.
Fig. 4 is a diagram illustrating an exemplary configuration of a decoding device.
Fig. 5 is a flowchart explaining a decoding process.
Fig. 6 is a diagram explaining the generation of spread information.
Fig. 7 is a flowchart explaining an encoding process.
Fig. 8 is a flowchart explaining a decoding process.
Fig. 9 is a diagram explaining zooming.
Fig. 10 is a diagram explaining the correction of object position information according to zooming.
Fig. 11 is a diagram illustrating an exemplary configuration of a decoding device.
Fig. 12 is a flowchart explaining a decoding process.
Fig. 13 is a diagram illustrating an exemplary configuration of a computer.

MODE FOR CARRYING OUT THE INVENTION

Hereinafter, embodiments to which the present technology is applied will be described with reference to the drawings.

<First embodiment>

<About the present technology>

The present technology makes it possible to obtain appropriate spread information more easily by generating the spread information about an audio object on the basis of other information different from the spread information to be obtained, such as object position information about the audio object, zoom information, size information, and spread information at a different time.
Hereinafter, a multi-channel audio signal and an audio signal of an audio object are described as being encoded in accordance with a predetermined standard or the like. Note that in the following, an audio object is also referred to simply as an object.
For example, an audio signal of each channel and each object is encoded and transmitted for every frame.
In other words, the encoded audio signal and information needed to decode the audio signal and the like are stored in a plurality of elements (bitstream elements), and a bitstream containing these elements is transmitted from the encoding side to the decoding side.
Specifically, in the bitstream for a single frame for example, a plurality of elements is arranged in order from the beginning, and an identifier indicating a terminal position related to the information about the frame is disposed at the end.
Additionally, the element disposed at the beginning is treated as an ancillary data region called a data stream element (DSE). Information related to each of a plurality of channels, such as information related to downmixing of the audio signal and identification information, is stated in the DSE.
Also, the encoded audio signal is stored in each element following after the DSE. In particular, an element storing the audio signal of a single channel is called a single channel element (SCE), while an element storing the audio signals of two paired channels is called a coupling channel element (CPE). The audio signal of each object is stored in the SCE.
In the present technology, spread information about the audio signal of each object is generated and stored in the DSE. More specifically, object metadata including generated spread information is stored in the DSE.
Herein, the metadata at least contains spread information and object position information.
The spread information is angle information indicating the range of size of the sound image of an object, that is, a spread angle indicating the degree of spread of the sound image of the sound of the object. In other words, the spread information can be said to be information that indicates the size of the region of the object.
Also, the object position information is information indicating the position of an object in a three-dimensional space, and for example is taken to be coordinate information including a horizontal direction angle, a vertical direction angle, and a radius indicating the position of the object as seen from a reference position (origin).
The horizontal direction angle is the angle in the horizontal direction (azimuth) indicating the position in the horizontal direction of the object as seen from the reference position, which is the position where the user is present. In other words, the horizontal direction angle is the angle obtained between a direction that serves as a reference in the horizontal direction and the direction of the object as seen from the reference position.
Herein, when the horizontal direction angle is 0 degrees, the object is positioned directly in front of the user, and when the horizontal direction angle is 90 degrees or -90 degrees, the object is positioned directly beside the user. Also, when the horizontal direction angle is 180 degrees or -180 degrees, the object becomes positioned directly behind the user.
Similarly, the vertical direction angle is the angle in the vertical direction (elevation) indicating the position in the vertical direction of the object as seen from the reference position, or in other words, the angle obtained between a direction that serves as a reference in the vertical direction and the direction of the object as seen from the reference position.
Also, the radius is the distance from the reference position to the position of the object in the space.
Meanwhile, manually assigning spread information every frame to each object is costly. For example, with movie content, many objects are handled over long periods of time, and therefore the costs of manual work are said to be particularly high.
Accordingly, an encoding device to which the present technology is applied is configured to generate spread information about a frame to be processed for an object on the basis of spread information about an other frame that is temporally different from the frame to be processed and object position information indicating the position of the object in the space.

Specifically, spread information is assigned manually only for a single specific frame (hereinafter also referred to as the reference frame), such as the first frame of the audio signal of the object, for example. Additionally, for frames other than the reference frame, spread information is generated by the encoding device on the basis of the object position information and the spread information about the reference frame.

Note that a single frame of the audio signal forming the content may be treated as the reference frame, or a plurality of frames may be treated as reference frames. Particularly, in the case of providing a plurality of reference frames, frames arranged at equal time intervals may be treated as the reference frames, or any frames arranged at unequal time intervals may be treated as the reference frames. Also, a frame that was not originally a reference frame may also be used as a reference frame after spread information is generated for that frame.

Furthermore, although an example in which spread information is generated in units of frames is described herein, spread information may also be generated in units of a predetermined amount of time, such as in units of multiple frames.

Hereinafter, to simplify the explanation, the description will continue by taking the case of treating a single frame as the reference frame.

As an example, suppose that the sound image of the sound of an object is to be spread out symmetrically in the horizontal direction and the vertical direction, and let s(i) be the spread information, that is, the spread angle, of a frame index i indicating the frame. Also, let ifrm be the frame index i indicating the current frame to be processed, and let rfrm be the frame index i of the reference frame.

Furthermore, let r(i) be the radius of an object included in the object position information in the frame having the frame index i of the object.

In such a case, the fact that the size of the object does not change as illustrated in Fig. 1 is utilized for example, and spread information s(ifrm) about the current frame ifrm is generated.

In the example illustrated in Fig. 1, the position of an origin O is treated as the position of the user's head which acts as the reference position, and the object that was at the position of a point OB11 in the reference frame rfrm is moving to the position of a point OB21 in the current frame ifrm.

At this time, the length of a line L11 joining the origin O acting as the reference and the point OB11, or in other words, the distance from the origin O to the point OB11, becomes the radius r(rfrm) included in the object position information in the reference frame rfrm. Similarly, the length of a line L21 joining the origin O and the point OB21, or in other words, the distance from the origin O to the point OB21, becomes the radius r(ifrm) included in the object position information in the current frame ifrm.

Also, the spread angle indicated by the spread information in the reference frame rfrm, that is, the spread information s(rfrm), is known. Let L12 be a line passing through the origin O whereby the angle obtained between the lines L11 and L12 is s(rfrm).

Because the spread information s(rfrm) is angle information indicating the range of size of the sound image of an object, that is, the range of the region of the object, the end portion (shell portion) of the region of the object is positioned on the line L12.

In other words, provided that L13 is a line passing through the point OB11 and also perpendicular to the line L11 and a point OBE11 is the intersection point between the line L12 and the line L13, the position of this point OBE11 becomes the position of the end portion (shell portion) of the region of the object. Consequently, the length (distance) from the point OB11 to the point OBE11 is the length from the center to the shell of the object in the reference frame rfrm.

Such a length from the point OB11 to the point OBE11, that is, the length of the line L13, can be expressed as $r(rfrm) \times \tan(s(rfrm))$ using the spread information s(rfrm) and the radius r(rfrm).

Also, with regard to the spread information s(ifrm) in the current frame ifrm to be computed, let L22 be a line passing through the origin O whereby the angle obtained between the lines L21 and L22 is s(ifrm). Furthermore, provided that L23 is a line passing through the point OB21 and also perpendicular to the line L21 and a point OBE21 is the intersection point between the line L22 and the line L23, the position of the point OBE21 becomes the position of the end portion (shell portion) of the region of the object in the current frame ifrm.

Consequently, the length from the point OB21 to the point OBE21, that is, the length of the line L23, becomes the length from the center to the shell of the object in the current frame ifrm, and can be expressed as $r(ifrm) \times \tan(s(ifrm))$ using the spread information s(ifrm) and the radius r(ifrm).

Here, assuming that the size of the object, that is, the size of the region of the sound image of the object, is constant (unchanging) regardless of frame, the length from the point OB11 to the point OBE11 and the length from the point OB21 to the point OBE21 become equal. In other words, $r(rfrm) \times \tan(s(rfrm)) = r(ifrm) \times \tan(s(ifrm))$ holds.

Consequently, from this relationship, the appropriate spread information s(ifrm) in the current frame ifrm can be obtained according to the following Formula (1).

[Math. 1]

$$s(ifrm) = \tan^{-1}\{\tan(s(rfrm)) \times r(rfrm)/r(ifrm)\} \quad \cdots (1)$$

In Formula (1), the product tan(s(rfrm)) × r(rfrm)/r(ifrm) of the ratio r(rfrm)/r(ifrm) of the radius r(ifrm) in the current frame ifrm and the radius r(rfrm) in the reference frame rfrm of the object and the tangent of the spread information s(rfrm) in the reference frame rfrm of the object is computed. Additionally, the inverse tangent of this product tan(s(rfrm)) × r(rfrm)/r(ifrm) is generated as the spread information s(ifrm) in the current frame ifrm of the object.

If Formula (1) is evaluated on the basis of the radius r(ifrm) in the current frame ifrm and the spread information s(rfrm) as well as the radius r(rfrm) in the reference frame rfrm in this way, the appropriate spread information s(ifrm) in the current frame ifrm can be generated with simple mathematical operations.

Particularly, with this example, because it is only required to manually assign spread information only for several frames of the audio signal of the object, the cost of manually assigning spread information can be reduced greatly.

Note that although the above describes a case in which the sound image of the sound of the object is to be spread out symmetrically in the horizontal direction and the vertical direction, spread information can be generated by similar calculations even in the case in which the sound image of the sound of the object is to be spread out asymmetrically in the horizontal direction and the vertical direction.

For example, let $s_{width}(i)$ be the spread information in the horizontal direction, that is, the spread angle in the horizontal direction, in the frame having the frame index i, and let $s_{height}(i)$ be the spread information in the vertical direction, that is, the spread angle in the vertical direction, in the frame having the frame index i.

In this case, it is sufficient to perform calculations similar to Formula (1) described above for each of the horizontal direction and the vertical direction.

In other words, by evaluating the following Formula (2), the spread information $s_{width}(ifrm)$ in the horizontal direction in the current frame ifrm can be obtained, and by evaluating the following Formula (3), the spread information $s_{height}(ifrm)$ in the vertical direction in the current frame ifrm can be obtained.

[Math. 2]

$$s_{width}(ifrm) = \tan^{-1}\{\tan(s_{width}(rfrm)) \times r(rfrm)/r(ifrm)\} \quad \cdots (2)$$

[Math. 3]

$$s_{height}(ifrm) = \tan^{-1}\{\tan(s_{height}(rfrm)) \times r(rfrm)/r(ifrm)\} \quad \cdots (3)$$

As above, if the object position information in the current frame and the object position information as well as the spread information in the reference frame are used, appropriate spread information in the current frame can be obtained more easily.

<Exemplary configuration of encoding device>

Next, a specific embodiment of an encoding device to which the present technology is applied will be described.

Fig. 2 is a diagram illustrating an exemplary configuration of an encoding device to which the present technology is applied.

An encoding device 11 illustrated in Fig. 2 includes a channel audio encoding unit 21, an object audio encoding unit 22, a metadata input unit 23, a spread information generation unit 24, and a packing unit 25.

The channel audio encoding unit 21 is supplied with an audio signal of each channel of multichannel audio containing M channels. For example, the audio signal of each channel is supplied from a microphone corresponding to each of these channels. In Fig. 2, the characters from "#0" to "#M-1" denote the channel number of each channel.

The channel audio encoding unit 21 encodes the supplied audio signal of each channel, and supplies encoded data obtained by the encoding to the packing unit 25.

The object audio encoding unit 22 is supplied with an audio signal of each of N objects. For example, the audio signal of each object is supplied from a microphone attached to each of these objects. In Fig. 2, the characters from "#0" to "#N-1" denote the object number of each object.

The object audio encoding unit 22 encodes the supplied audio signal of each object, and supplies the obtained encoded data to the packing unit 25.

The metadata input unit 23 supplies metadata of each object to the spread information generation unit 24.

For example, the metadata in the reference frame of an object contains object position information and spread information. In contrast, the metadata of a frame that is not a reference frame of an object contains object position information, but does not contain spread information.

The spread information generation unit 24 generates spread information in a frame that is not a reference frame on the basis of the metadata supplied from the metadata input unit 23, and stores the generated spread information in the metadata. With this arrangement, in the spread information generation unit 24, metadata containing object position information and spread information is obtained for all frames.

The spread information generation unit 24 supplies the metadata of each object containing object position information and spread information to the packing unit 25.

The packing unit 25 packs the encoded data supplied from the channel audio encoding unit 21, the encoded data supplied from the object audio encoding unit 22, and the metadata supplied from the spread information generation unit 24 to generate and output a bitstream.

The bitstream obtained in this way contains the encoded data of each channel, the encoded data of each object, and the metadata of each object for every frame.

Herein, the audio signals of each of the M channels and the audio signals of each of the N objects stored in the bitstream for a single frame are the audio signals of the same frame that should be reproduced simultaneously.

<Description of encoding process>

Next, a process performed by the encoding device 11 will be described.

When the encoding device 11 is supplied with the audio signals of each of a plurality of channels and the audio signals of each of a plurality of objects one frame at a time, the encoding device 11 performs an encoding process and outputs a bitstream containing the encoded audio signals.

Hereinafter, the flowchart in Fig. 3 will be referenced to describe the encoding process by the encoding device 11.

In step S11, the spread information generation unit 24 determines whether or not the frame to be processed is a reference frame.

For example, by receiving an input operation by a user, communicating with an external source, or reading out from an external recording area, the metadata input unit 23 acquires the metadata of each object in the frame to be processed, and supplies the acquired metadata to the spread information generation unit 24.

In the case in which spread information is contained in the metadata in the frame to be processed of each object supplied from the metadata input unit 23, the spread information generation unit 24 determines that the frame to be processed is a reference frame.

Note that the frames treated as reference frames are described as being the same for all objects to simplify the explanation herein, but in cases where the frames treated as reference frames are different for every object, it is sufficient to perform the processes of step S11 and step S12 for every object.

In step S11, in the case of determining that the frame to be processed is a reference frame, the spread information generation unit 24 supplies the metadata in the frame to be processed of each object supplied from the metadata input unit 23 to the packing unit 25 as-is, and the process proceeds to step S13.

In contrast, in the case of determining in step S11 that the frame to be processed is not a reference frame, the process proceeds to step S12.

In step S12, the spread information generation unit 24 generates spread information in the frame to be processed for each object on the basis of the metadata supplied from the metadata input unit 23.

For example, the spread information generation unit 24 generates spread information in the frame to be processed by evaluating Formula (1) described above or Formulas (2) and (3) described above on the basis of the object position information contained in the metadata of the frame to be processed and the object position information and the spread information contained in the metadata of a reference frame supplied from the metadata input unit 23 previously.

When the spread information is generated for each object, the spread information generation unit 24 stores the generated spread information in the metadata of each of these objects, and supplies the metadata containing the object position information as well as the spread information to the packing unit 25.

After metadata containing object position information as well as spread information is obtained for each object in this way, the process proceeds to step S13.

When the frame to be processed is determined to be a reference frame in step S11 or when spread information is generated in step S12, the process in step S13 is performed.

In other words, in step S13, the packing unit 25 stores the metadata of each object supplied from the spread information generation unit 24 in the DSE of the bitstream.

In step S14, the channel audio encoding unit 21 encodes the supplied audio signal of each channel, and supplies encoded data of each channel obtained as a result to the packing unit 25.

In step S15, the packing unit 25 stores the encoded data of the audio signal of each channel supplied from the channel audio encoding unit 21 in the SCE or the CPE of the bitstream. In other words, the encoded data is stored in each element disposed following the DSE in the bitstream.

In step S16, the object audio encoding unit 22 encodes the supplied audio signal of each object, and supplies encoded data of each object obtained as a result to the packing unit 25.

In step S17, the packing unit 25 stores the encoded data of the audio signal of each object supplied from the object audio encoding unit 22 in the SCE of the bitstream. In other words, the encoded data is stored in some elements disposed after the DSE in the bitstream.

According to the above process, for the frame being processed, a bitstream storing the encoded data of the audio signals of all channels and the metadata as well as the encoded data of the audio signals of all objects is obtained.

In step S18, the packing unit 25 outputs the obtained bitstream for a single frame.

In step S19, the encoding device 11 determines whether or not to end the process. For example, in the case in which encoding has ended for all frames, it is determined to end the process in step S19.

In the case of determining not to end the process in step S19, the process returns to step S11, the next frame is treated as the frame to be processed, and the process described above is repeated.

In contrast, in the case of determining to end the process in step S19, the processing being performed by each unit of the encoding device 11 is stopped, and the encoding process ends.

As above, the encoding device 11 generates the spread information of a frame that is not the reference frame of each object, and outputs the spread information stored in the bitstream. With this arrangement, the cost of manually assigning spread information can be reduced, and appropriate spread information can be obtained more easily.

<Modification 1 of first embodiment>

<Exemplary configuration of decoding device>

Note that although the above describes an example of generating the spread information in the encoding device 11, the spread information may also be generated in the decoding device. In such a case, the decoding device that accepts the input of a bitstream output from the encoding device and decodes the encoded data contained in the bitstream is configured as illustrated in Fig. 4, for example.

A decoding device 101 illustrated in Fig. 4 includes an unpacking/decoding unit 111, a spread information generation unit 112, a rendering unit 113, and a mixing unit 114.

The unpacking/decoding unit 111 acquires the bitstream output from the encoding device, and in addition, unpacks and decodes the bitstream.

The unpacking/decoding unit 111 supplies the audio signal of each object obtained by unpacking and decoding to the rendering unit 113, and in addition, supplies the metadata of each object obtained by unpacking and decoding to the spread information generation unit 112. Note that at this point, it is assumed that spread information is contained only in the metadata of reference frames, while spread information is not contained in the metadata of frames that are not reference frames.

Also, the unpacking/decoding unit 111 supplies the audio signal of each channel obtained by unpacking and decoding to the mixing unit 114.

The spread information generation unit 112 generates spread information in a frame that is not a reference frame on the basis of the metadata of each object supplied from the unpacking/decoding unit 111, and stores the generated spread information in the metadata. With this arrangement, in the spread information generation unit 112, metadata containing object position information and spread information is obtained for all frames.

The spread information generation unit 112 supplies the metadata of each object containing object position information and spread information to the rendering unit 113.

The rendering unit 113 generates the audio signals of M channels on the basis of the audio signal of each object supplied from the unpacking/decoding unit 111 and the metadata of each object supplied from the spread information generation unit 112, and supplies the generated audio signals to the mixing unit 114. At this time, the rendering unit 113 generates the audio signal of each of the M channels such that the sound image of each object is localized at a position indicated by the object position information of each object, and such that the sound image spreads out to the degree indicated by the spread information of each object.

The mixing unit 114 performs a weighted addition of the audio signal of each channel supplied from the unpacking/decoding unit 111 and the audio signal of each channel supplied from the rendering unit 113 for every channel, and generates a final audio signal of each channel. The mixing unit 114 supplies the final audio signal of each channel obtained in this way to external speakers respectively corresponding to each channel, and causes sound to be reproduced.

<Description of decoding process>

Next, the operations of the decoding device 101 will be described.

When a bitstream is supplied from the encoding device, the decoding device 101 performs a decoding process to generate and output audio signals to the speakers. Hereinafter, the flowchart in Fig. 5 will be referenced to describe the decoding process performed by the decoding device 101.

In step S51, the unpacking/decoding unit 111 acquires the bitstream for a single frame transmitted from the encoding device. In other words, the bitstream of the frame to be processed is received.

In step S52, the unpacking/decoding unit 111 performs a frame decoding process.

In other words, the unpacking/decoding unit 111 unpacks the bitstream of the frame to be processed acquired in step S51, and acquires the encoded data of each channel, the encoded data of each object, and the metadata of each object.

Subsequently, the unpacking/decoding unit 111 decodes the encoded data of each channel, and supplies the audio signal of each channel obtained as a result to the mixing unit 114. Also, the unpacking/decoding unit 111 decodes the encoded data of each object, and supplies the audio signal of each object obtained as a result to the rendering unit 113.

Furthermore, the unpacking/decoding unit 111 supplies the acquired metadata of each object to the spread information generation unit 112.

In step S53, the spread information generation unit 112 determines whether or not the frame to be processed is a reference frame.

For example, in the case in which spread information is contained in the metadata in the frame to be processed of each object supplied from the unpacking/decoding unit 111, the spread information generation unit 112 determines that the frame to be processed is a reference frame.

In step S53, in the case of determining that the frame to be processed is a reference frame, the spread information generation unit 112 supplies the metadata in the frame to be processed of each object supplied from the unpacking/decoding unit 111 to the rendering unit 113 as-is, and the process proceeds to step S55.

In contrast, in the case of determining in step S53 that the frame to be processed is not a reference frame, the process proceeds to step S54.

In step S54, the spread information generation unit 112 generates spread information in the frame to be processed for each object on the basis of the metadata supplied from the unpacking/decoding unit 111.

For example, the spread information generation unit 112 generates spread information in the frame to be processed by evaluating Formula (1) described above or Formulas (2) and (3) described above on the basis of the object position information contained in the metadata of the frame to be processed (the current frame) and the object position information and the spread information contained in the metadata of a reference frame supplied previously.

When the spread information is generated for each object, the spread information generation unit 112 stores the generated spread information in the metadata of each of these objects, and supplies the metadata containing the object position information as well as the spread information to the rendering unit 113.

After metadata containing object position information as well as spread information is obtained for each object in this way, the process proceeds to step S55.

When the frame to be processed is determined to be a reference frame in step S53 or when spread information is generated in step S54, the process in step S55 is performed.

In step S55, the rendering unit 113 renders the audio signals of the objects on the basis of the audio signals of the objects supplied from the unpacking/decoding unit 111 and the metadata supplied from the spread information generation unit 112.

For example, for each object, the rendering unit 113 generates the audio signal of each channel according to vector base amplitude panning (VBAP) on the basis of the spread information and the object position information, and supplies the generated audio signals to the mixing unit 114. In step S55, the audio signals are generated such that the sound images of the objects are localized at positions indicated by the object position information, and such that the sound images spread out to the degree indicated by the spread information.

In step S56, the mixing unit 114 performs a weighted addition of the audio signal of each channel supplied from the unpacking/decoding unit 111 and the audio signal of each channel supplied from the rendering unit 113 for every channel, and supplies the resulting audio signals to external speakers. With this arrangement, because each speaker is supplied with an audio signal of a channel corresponding to the speaker, each speaker reproduces sound on the basis of the supplied audio signal.

In step S57, the decoding device 101 determines whether or not to end the process. For example, in the case in which output of the audio signal to the speaker has ended for all frames, it is determined to end the process in step S57.

In the case of determining not to end the process in step S57, the process returns to step S51, the next frame is treated as the frame to be processed, and the process described above is repeated.

In contrast, in the case of determining to end the process in step S57, the processing being performed by each unit of the decoding device 101 is stopped, and the decoding process ends.

As above, the decoding device 101 performs rendering by generating the spread information of a frame that is not a reference frame of each object.

With this arrangement, the cost of manually assigning spread information can be reduced, and appropriate spread information can be obtained more easily. Also, if the spread information of frames other than the reference frames are made to be generated on the decoding device 101 side, it is not necessary to store the spread information for frames other than the reference frames in the bitstream. Consequently, the bit rate of the bitstream to transmit to the decoding device 101 can be reduced.

<Second embodiment>

<About the generation of spread information>

Meanwhile, the first embodiment describes a case in which spread information is assigned manually to a subset of frames of the audio signals of objects.

However, a large amount of content without any spread information assigned at all also exists.

For example, some encoding schemes that can handle object audio are designed such that a header flag can be used to switch between including or not including spread information in the metadata. In other words, the existence of a bitstream without assigned spread information is allowed.

Additionally, there are also object audio encoding schemes in which spread information is not included in the bitstream in the first place.

Given such a background, a large amount of content exists in which spread information is not assigned appropriately in any of the times (frames), and as a result, reproduction that feels highly realistic cannot be achieved for such content.

Accordingly, by generating spread information on the basis of the object position information of an object and size information indicating the size of the object, it may be configured such that appropriate spread information can be obtained without manually assigning spread information.

For example, in several object audio encoding schemes, size information about each object is included in the bitstream. In the case in which size information about objects exists, spread information can be generated by using the object position information and the size information without manually assigning the spread information.

Specifically, for example, suppose that the sound image of the sound of an object is to be spread out symmetrically in the horizontal direction and the vertical direction, and suppose that information indicating the distance from the center to the shell (end portion) of the object is treated as size information about the object. In the following, let d(i) be the size information in the frame having the frame index i.

In this case, provided that the point OB21 is the center position of the object in the current frame ifrm and the point OBE21 is the position of the end portion (shell portion) of the object as illustrated in Fig. 6 for example, the distance from the point OB21 to the point OBE21 becomes the size information d(ifrm), that is, a distance indicated by the size information. Note that in Fig. 6, portions corresponding to the case in Fig. 1 are denoted with the same reference signs, and description thereof is omitted where appropriate.

In this example, the position of the point OB21 is determined according to the radius r(ifrm) included in the object position information. Also, the position of the point OBE21 is determined from the position of the point OB21 and the size information d(ifrm). Herein, the point OBE21 is taken to be positioned on a line orthogonal to the line L21 joining the origin O and the point OB21. In other words, the line L23 joining the point OB21 and the point OBE21 is taken to be a line perpendicular to the line L21.

In the case in which object position information and size information about an object are given in this way, the length of the line L21 expressed as r(ifrm) and the length of the line L23 expressed as d(ifrm) are known.

Provided that the line L22 is the line joining the origin O and the point OBE21, the spread information s(ifrm) in the current frame ifrm, that is, the spread angle, is the angle obtained between the line L22 and the line L21. Consequently, the radius r(ifrm) and the size information d(ifrm) can be used to compute the spread information s(ifrm) according to the following Formula (4) .

[Math. 4]

$$s(ifrm) = \tan^{-1}\{d(ifrm)/r(ifrm)\} \quad \cdots (4)$$

In Formula (4), a ratio d(ifrm)/r(ifrm) of the size information d(ifrm) in the current frame ifrm of the object and the radius r(ifrm) in the current frame ifrm of the object is computed, and the inverse tangent of the ratio d(ifrm)/r(ifrm) is generated as the spread information s(ifrm) in the current frame ifrm of the object.

If Formula (4) is evaluated on the basis of the radius r(ifrm) and the size information d(ifrm) in the current frame ifrm of the object in this way, appropriate spread information s(ifrm) in the current frame ifrm of the object can be generated with simple mathematical operations.

Particularly, with this example, because it is not necessary to manually assign the spread information, the cost of assigning the spread information can be reduced greatly. In other words, appropriate spread information can be generated easily with respect to all frames, even in cases where there is not a single frame with assigned spread information. With this arrangement, the spread information can be used to achieve content reproduction that feels highly realistic.

Also, for the case in which the sound image of the sound of an object is to be spread out asymmetrically in the horizontal direction and the vertical direction, spread information likewise can be generated by calculations similar to Formula (4).

In other words, for example, let the "horizontal direction distance" be the distance from the center to the shell in the horizontal direction, that is, the end portion in the horizontal direction, of an object, and let the "vertical direction distance" be the distance from the center to the shell in the vertical direction, that is, the end portion in the vertical direction, of an object.

Also, assume that for an object in the current frame ifrm, the horizontal direction distance $d_{width}$(ifrm) and the vertical direction distance $d_{height}$(ifrm) are included as size information.

In this case, similarly to the Formula (4) described above, by evaluating the following Formula (5), the spread information $s_{width}$(ifrm) in the horizontal direction in the current frame ifrm can be obtained, and by evaluating the following Formula (6), the spread information $s_{height}$(ifrm) in the vertical direction in the current frame ifrm can be obtained.

[Math. 5]

$$s_{width}(ifrm) = \tan^{-1}\{d_{width}(ifrm)/r(ifrm)\} \quad \cdots (5)$$

[Math. 6]

$$s_{height}(ifrm) = \tan^{-1}\{d_{height}(ifrm)/r(ifrm)\} \quad \cdots (6)$$

In Formula (5), horizontal direction spread information $s_{width}$(ifrm) is computed on the basis of the radius r(ifrm) and the horizontal direction distance $d_{width}$(ifrm) acting as the size information in the current frame ifrm. Similarly, in Formula (6), vertical direction spread information $s_{height}$(ifrm) is computed on the basis of the radius r(ifrm) and the vertical direction distance $d_{height}$(ifrm) acting as the size information in the current frame ifrm.

<Description of encoding process>

In the case in which spread information is generated on the basis of object position information and size information as above, in the encoding device 11 illustrated in Fig. 2, metadata and size information are supplied from the metadata input unit 23 to the spread information generation unit 24. At this time, the metadata is in a state of containing object position information but not containing spread information.

The spread information generation unit 24 generates spread information on the basis of the object position information and the size information supplied from the metadata input unit 23.

In the case in which the spread information is generated in this way, the encoding process illustrated in Fig. 7 is performed in the encoding device 11. Hereinafter, the flowchart in Fig. 7 will be referenced to describe the encoding process by the encoding device 11.

In step S81, the spread information generation unit 24 generates spread information.

In other words, by receiving an input operation by a user, communicating with an external source, or reading out from an external recording area, the metadata input unit 23 acquires the metadata and size information of each object in the frame to be processed, and supplies the acquired metadata and size information to the spread information generation unit 24.

Subsequently, the spread information generation unit 24 generates spread information for every object on the basis of the metadata and the size information supplied from the metadata input unit 23.

Specifically, the spread information generation unit 24 generates spread information in the frame to be processed by evaluating Formula (4) described above or Formulas (5) and (6) described above on the basis of the object position information contained in the metadata of the frame to be processed and the size information of the frame to be processed.
Then, the spread information generation unit 24 stores the generated spread information in the metadata of each of these objects, and supplies the metadata containing the object position information and the spread information as well as the size information to the packing unit 25.
After the spread information is generated, the processes from step S82 to step S88 are performed and the encoding process ends, but since these processes are similar to the processes from step S13 to step S19 in Fig. 3, a description is omitted. However, in step S82, the size information about the objects is also stored together with the metadata in the DSE of the bitstream.
As above, the encoding device 11 generates spread information on the basis of object position information and size information, and outputs the spread information stored in the bitstream. With this arrangement, the cost of assigning spread information can be reduced, and appropriate spread information can be obtained more easily.

<Modification 1 of second embodiment>

<Description of decoding process>

Also, in the case in which spread information is generated on the basis of object position information and size information, it is also possible to generate the spread information in the decoding device 101 illustrated in Fig. 4.
In the case in which the spread information is generated in the decoding device 101, the decoding process illustrated in Fig. 8 is performed in the decoding device 101. Hereinafter, the flowchart in Fig. 8 will be referenced to describe the decoding process by the decoding device 101.
Note that since the processes of step S111 and step S112 are similar to the processes of step S51 and step S52 in Fig. 5, a description will be omitted.
However, in step S112, the metadata and size information of each object are acquired by the unpacking of the bitstream in the unpacking/decoding unit 111, and the metadata and size information are supplied to the spread information generation unit 112. In this case, the metadata acquired by unpacking contains object position information but does not contain spread information.
In step S113, the spread information generation unit 112 generates spread information in the frame to be processed for each object on the basis of the metadata and the size information supplied from the unpacking/decoding unit 111.
For example, the spread information generation unit 112 generates spread information in the frame to be processed by evaluating Formula (4) described above or Formulas (5) and (6) described above on the basis of the object position information contained in the metadata of the frame to be processed and the size information of the frame to be processed.
When the spread information of each object is generated, the spread information generation unit 112 stores the generated spread information in the metadata of each of these objects, and supplies the metadata containing the object position information as well as the spread information to the rendering unit 113.
After the process in step S113 is performed, the processes from step S114 to step S116 are performed and the decoding process ends, but since these processes are similar to the processes from step S55 to step S57 in Fig. 5, a description is omitted.
As above, the decoding device 101 generates spread information on the basis of the object position information and the size information about each object, and performs rendering.
With this arrangement, the cost of assigning spread information can be reduced, and appropriate spread information can be obtained more easily. Also, because it is not necessary to store spread information in the bitstream, the bit rate of the bitstream to transmit to the decoding device 101 can be reduced.

<Third embodiment>

<About the generation of spread information>

Meanwhile, in several encoding schemes that can handle object audio, by correcting the object position information on the basis of zoom information specified by the user, object movement corresponding to the zooming is achieved.
On the other hand, regarding the sound image (spread) of objects, a process such as correcting the spread information according to the zoom information is not performed. For this reason, even in cases where an object comes close to the user due to zooming for example, the sound image of the object does not spread out, and the feeling of realism will be impaired as a result.

Accordingly, it may be configured such that by appropriately correcting the spread information in the frame to be processed on the basis of the zoom information, content reproduction that feels more realistic can be achieved.

For example, suppose that on the decoding side, the object position information of an object is corrected on the basis of zoom information specified by the user, and movement of the object corresponding to the zooming is achieved.

Specifically, as illustrated by the arrow A11 in Fig. 9 for example, suppose that an object OB61 is being displayed on a virtual screen SC11 positioned in front of a user U11 in the state before zooming having a point SCE11 and a point SCE12 as endpoints in the horizontal direction.

Herein, suppose that the object OB61 is an object corresponding to an audio object, and the vertical direction angle (elevation) indicating the position in the vertical direction of the object OB61 as seen from the user U11 is 0 degrees. In other words, suppose that the vertical direction angle indicated by the object position information of the object OB61 is 0 degrees.

Also, assume that the user U11 is positioned at an origin O that acts as a reference, and let a point SCO11 be the intersection point between a line L61 passing through the origin O perpendicular to the face of the screen SC11, and the screen SC11.

Herein, the point SCO11 is the center position of the screen SC11, and the position of the point SCO11 as seen from the user U11 is a position where the horizontal direction angle and the vertical direction angle are 0 degrees.

In this state, the object OB61 as seen from the user U11 is positioned in a diagonally forward-right direction. At this time, provided that a line L62 is the line joining the origin O and the object OB61 and $\varphi$ is the angle obtained between the line L61 and the line L62, the position of the object OB61 as seen from the user U11 is the position where the horizontal direction angle is $\varphi$ and the vertical direction angle is 0 degrees.

Suppose that in such a state illustrated by the arrow A11, the user U11 or the like performs a zoom operation, and zoom information is given.

Herein, zoom information is taken to be information from which the position and size of a post-zoom virtual screen SC21 with respect to the screen SC11 before zooming is specifiable, such as information indicating the center position and zoom magnification of the post-zoom virtual screen SC21, for example. In other words, the zoom information is taken to be information from which the position and size relationships between the screen SC11 and the screen SC21 are specifiable.

Note that for the sake of simplifying the explanation herein, the center position of the screen before and after zooming is assumed not to change (move) in the vertical direction as seen from the user U11 before zooming.

From such zoom information, a point SCO21 at the center position of the screen SC21 and points SCE21 and SCE22, which are the ends in the horizontal direction of the screen SC21, are specified.

When the zoom information is supplied, the object position information of the object OB61 is corrected on the basis of the zoom information, and the sound image localization position of the object OB61 moves to a position according to the zooming. Also, a zooming process is performed on an image of the content.

With this arrangement, an image by which the user U11 appears to have moved in front of the virtual screen SC21 is displayed, and the localization position of the sound image also changes. In other words, image display control and sound image localization control are performed such that the user U11 appears to have moved as illustrated by the arrow M11.

When the zooming process is performed, the user U11 becomes positioned in front of the screen SC21 as illustrated by the arrow A12 for example, and therefore the object OB61 becomes positioned in a diagonally forward-left direction as seen from the user U11.

For example, let a line L63 be a line passing through the position of the user U11, that is, the origin O, after zooming and also perpendicular to the face of the screen SC21. At this time, the intersection point between the line L63 and the screen SC21 becomes the point SCO21 at the center position of the screen SC21, and the position of the point SCO21 as seen from the user U11 after zooming is the position where the horizontal direction angle and the vertical direction angle are 0 degrees.

Also, let a line L64 be the line joining the origin O after zooming and the object OB61. Provided that $\varphi'$ is the angle obtained between the line L63 and the line L64, the position of the object OB61 as seen from the user U11 after zooming is the position where the horizontal direction angle is $\varphi'$ and the vertical direction angle is 0 degrees.

When zoom information is supplied in this way, the horizontal direction angle $\varphi$ indicating the position in the horizontal direction of the object OB61 is corrected to $\varphi'$.

Specifically, the horizontal direction angle $\varphi'$ in the horizontal direction after the correction of the object position information of the object OB61 is computed as follows.

In other words, suppose that zooming is performed in a state in which the object OB61 is diagonally forward-right of the user U11 as illustrated by the arrow A21 in Fig. 10 for example, and after zooming, the object OB61 becomes positioned diagonally forward-left of the user U11 as illustrated by the arrow A22 in Fig. 10. Note that in Fig. 10, portions corresponding to the case in Fig. 9 are denoted with the same reference signs, and description thereof is omitted where appropriate.

As illustrated by the arrows A21 in Fig. 10 for example, let $\varphi^{repro}_{left}$ be the angle obtained between the line joining the position of the user U11, that is, the origin O, before zooming and the point SCE11, and the line L61. Similarly, let ($\varphi^{repro}_{right}$ be the angle obtained between the line joining the origin O before zooming and the point SCE12, and the line L61. These angles $\varphi^{repro}_{left}$ and $\varphi^{repro}_{right}$ are known information.

Also, let $\varphi^{ZASource}_{left}$ be the angle obtained between the line joining the position of the user U11, that is, the origin O, before zooming and the point SCE21, and the line L61. Furthermore, let $\varphi^{ZASource}_{right}$ be the angle obtained between the line joining the origin O before zooming and the point SCE22, and the line L61. These angles $\varphi^{ZASource}_{left}$ and $\varphi^{ZASource}_{right}$ can be computed from the zoom information.

Furthermore, assuming that the relative positional relationship between the user U11 and the virtual screen is the same before and after zooming, as illustrated by the arrow A22, the angle obtained between the line joining the position of the user U11, that is, the origin O, after zooming and the point SCE21, and the L63 becomes $\varphi^{repro}_{left}$. Similarly, the angle obtained between the line joining the origin O after zooming and the point SCE22, and the line L63 becomes $\varphi^{repro}_{right}$.

If these angles $\varphi^{repro}_{left}$, $\varphi^{repro}_{right}$, $\varphi^{ZASource}_{left}$, and $\varphi^{ZASource}_{right}$ as well as the horizontal direction angle $\varphi$ in the uncorrected object position information of the object OB61 are used, the horizontal direction angle $\varphi'$ in the corrected object position information of the object OB61 can be computed. In other words, the horizontal direction angle $\varphi'$ can be computed according to the following Formula (7).

[Math. 7]

$$\phi' = \frac{\phi^{repro}_{left} - \phi^{repro}_{right}}{\phi^{ZASource}_{left} - \phi^{ZASource}_{right}} (\phi - \phi^{ZASource}_{right}) + \phi^{repro}_{right} \quad \cdots (7)$$

Note that the above describes an example in which the center position of the screen does not change in the vertical direction before and after zooming. However, even in the case in which the center position of the screen also changes in the vertical direction before and after zooming, the vertical direction angle in the corrected object position information can be computed similarly to the horizontal direction.

For example, let $\theta$ be the vertical direction angle of the object position information before zooming, that is, before correction, and let $\theta'$ be the vertical direction angle of the object position information after zooming, that is, after correction.

Also, let $\theta^{repro}_{top}$ be the angle obtained between a line joining the position of the user, that is, the origin O, before and after zooming and the center of the virtual screen, and a line joining the origin O and a top edge of the virtual screen. Let $\theta^{repro}_{bottom}$ be the angle obtained between a line joining the origin O before and after zooming and the center of the virtual screen, and a line joining the origin O and a bottom edge of the virtual screen. These angles $\theta^{repro}_{top}$ and $\theta^{repro}_{bottom}$ are known.

Furthermore, let $\theta^{ZASource}_{top}$ be the angle obtained between a line joining the origin O before zooming and the center of the virtual screen before zooming, and a line joining the origin O before zooming and the top edge of the virtual screen after zooming. Similarly, let $\theta^{ZAsource}_{bottom}$ be the angle obtained between a line joining the origin O before zooming and the center of the virtual screen before zooming, and a line joining the origin O before zooming and the bottom edge of the virtual screen after zooming. These angles $\theta^{ZAsource}_{top}$ and $\theta^{ZAsource}_{bottom}$ can be computed from the zoom information.

In this case, if the angles $\theta^{repro}_{top}$, $\theta^{repro}_{bottom}$, $\theta^{ZAsource}_{top}$, and $\theta^{ZAsource}_{bottom}$ as well as the vertical direction angle $\theta$ in the uncorrected object position information of the object are used, the vertical direction angle $\theta'$ in the corrected object position information of the object can be computed. In other words, the vertical direction angle $\theta'$ can be computed according to the following Formula (8).

[Math. 8]

$$\theta' = \frac{\theta^{repro}_{top} - \theta^{repro}_{bottom}}{\theta^{ZASource}_{top} - \theta^{ZASource}_{bottom}} (\theta - \theta^{ZASource}_{bottom}) + \theta^{repro}_{bottom} \quad \cdots (8)$$

When correcting the object position information, the calculations of Formula (7), Formula (8), or the like are performed on the basis of the zoom information and the uncorrected object position information, and the horizontal direction angle, the vertical direction angle, and the radius of the object included in the object position information are corrected.

Meanwhile, the relationship of the spread angles before and after zooming is the same as the relationship of the horizontal direction angles and the relationship of the vertical direction angles indicated by the object position information before and after zooming. For this reason, by performing calculations similar to Formulas (7) and (8), it is possible to correct the spread information appropriately. In other words, appropriate spread information after zooming can be generated.

Specifically, for example, suppose that the sound image of the sound of an object is to be spread out asymmetrically in the horizontal direction and the vertical direction, and suppose that the spread information $s_{width}(ifrm)$ and the spread information $s_{height}(ifrm)$ are given as the spread information in the current frame ifrm before zooming.

Also, let $s'_{width}(ifrm)$ be the spread angle in the horizontal direction in the current frame ifrm after zooming, and let $s'_{height}(ifrm)$ be the spread angle in the vertical direction in the current frame ifrm after zooming. In other words, information containing the spread information $s'_{width}(ifrm)$ and the spread information $s'_{height}(ifrm)$ is taken to be the spread information after correction (after zooming) that has been corrected according to zooming based on the zoom information.

In this case, by substituting φ and φ' in Formula (7) with $s_{width}(ifrm)$ and $s'_{width}(ifrm)$, the corrected spread information $s'_{width}(ifrm)$ can be obtained. Similarly, by substituting O and θ' in Formula (8) with $s_{height}$ (ifrm) and $s'_{height}(ifrm)$, the corrected spread information $s'_{height}(ifrm)$ can be obtained.

In other words, by evaluating Formula (9) below on the basis of the before-zooming (uncorrected) spread information $s_{width}(ifrm)$ in the current frame ifrm of the object, the corrected (after-zooming) spread information $s'_{width}(ifrm)$ can be obtained.

Also, by evaluating Formula (10) below on the basis of the before-zooming (uncorrected) spread information $s_{height}(ifrm)$ in the current frame ifrm of the object, the corrected spread information $s'_{height}(ifrm)$ can be obtained.

[Math. 9]

$$s'_{width}(ifrm) = \frac{\phi_{left}^{repro} - \phi_{right}^{repro}}{\phi_{left}^{ZASource} - \phi_{right}^{ZASource}} \left(s_{width}(ifrm) - \phi_{right}^{ZASource}\right) + \phi_{right}^{repro} \quad \cdots (9)$$

[Math. 10]

$$s'_{height}(ifrm) = \frac{\theta_{top}^{repro} - \theta_{bottom}^{repro}}{\theta_{top}^{ZASource} - \theta_{bottom}^{ZASource}} \left(s_{height}(ifrm) - \theta_{bottom}^{ZASource}\right) + \theta_{bottom}^{repro} \quad \cdots (10)$$

The correction of the spread information according to these Formulas (9) and (10) can also be said to generate spread information after zooming in the current frame ifrm of the object on the basis of the position and size relationships between the virtual screen SC11 before zooming and the virtual screen SC21 after zooming determined by the zoom information, and also on the basis of the spread information before zooming in the current frame ifrm of the object.

Note that although the above describes an example of a case in which the sound image of the sound of an object is to be spread out asymmetrically in the horizontal direction and the vertical direction for example, it is possible to correct the spread information similarly even in the case in which the sound image is to be spread out symmetrically in the horizontal direction and the vertical direction.

In such a case, for example, provided that s'(ifrm) is the corrected spread information, it is sufficient to perform the calculations by substituting the spread information $s_{width}(ifrm)$ and the spread information $s'_{width}(ifrm)$ in Formula (9) with the spread information s(ifrm) and the spread information s'(ifrm).

<Exemplary configuration of decoding device>

In the case in which the object position information and the spread information are corrected on the basis of the zoom information as described above, the decoding device is configured as illustrated in Fig. 11, for example. Note that in Fig. 11, portions corresponding to the case in Fig. 4 are denoted with the same reference signs, and description thereof is omitted where appropriate.

A decoding device 101 illustrated in Fig. 11 includes an unpacking/decoding unit 111, a spread information generation unit 112, a rendering unit 113, and a mixing unit 114. Also, the spread information generation unit 112 of the decoding device 101 illustrated in Fig. 11 is provided with a position information correction unit 161 and a spread information correction unit 162.

The decoding device 101 illustrated in Fig. 11 differs from the decoding device 101 illustrated in Fig. 4 in that the spread information generation unit 112 is provided with the position information correction unit 161 and the spread information correction unit 162, but otherwise has the same configuration as the decoding device 101 illustrated in Fig. 4.

In this example, the metadata in all frames of each object is supplied from the unpacking/decoding unit 111 to the spread information generation unit 112. In this case, the metadata always contains object position information and spread information. In addition, the spread information generation unit 112 is also supplied with zoom information according to a user operation or the like.

The position information correction unit 161 of the spread information generation unit 112 corrects the object position information contained in the metadata supplied from the unpacking/decoding unit 111 on the basis of the supplied zoom information.

The spread information correction unit 162 of the spread information generation unit 112 corrects the spread information contained in the metadata supplied from the unpacking/decoding unit 111 on the basis of the supplied zoom information. In other words, the spread information correction unit 162 generates the after-zooming spread information on the basis of the zoom information and the before-zooming (uncorrected) spread information.

The spread information generation unit 112 supplies the metadata of each object containing corrected object position information and corrected spread information to the rendering unit 113.

<Description of decoding process>

Next, the operations of the decoding device 101 illustrated in Fig. 11 will be described.

In other words, hereinafter, the flowchart in Fig. 12 will be referenced to describe the decoding process by the decoding device 101 illustrated in Fig. 11.

Note that since the processes of step S141 and step S142 are similar to the processes of step S51 and step S52 in Fig. 5, a description will be omitted. However, in step S142, metadata containing object position information and spread information for each object is supplied to the spread information generation unit 112.

In step S143, the position information correction unit 161 corrects the object position information contained in the metadata supplied from the unpacking/decoding unit 111 on the basis of the supplied zoom information.

In other words, the position information correction unit 161 corrects the horizontal direction angle, the vertical direction angle, and the radius included in the object position information on the basis of the zoom information and the object position information contained in the metadata supplied from the unpacking/decoding unit 111.

Specifically, the position information correction unit 161 computes the corrected horizontal direction angle $\varphi'$ indicating the position of the object by evaluating Formula (7) described above, and also computes the corrected vertical direction angle $\theta'$ indicating the position of the object by evaluating Formula (8) described above. Also, the position information correction unit 161 computes the corrected radius indicating the position of the object by dividing the radius indicating the position of the object by the zoom magnification.

In step S144, the spread information correction unit 162 corrects the spread information contained in the metadata supplied from the unpacking/decoding unit 111 on the basis of the supplied zoom information. In other words, after-zooming spread information is generated according to the zooming.

For example, suppose that the spread information $s_{width}$ (ifrm) and the spread information $s_{height}$ (ifrm) are included as the spread information of the metadata supplied from the unpacking/decoding unit 111. In this case, the spread information correction unit 162 computes the corrected spread information $s'_{width}$ (ifrm) and spread information $s'_{height}$ (ifrm) by evaluating Formulas (9) and (10) described above on the basis of the above spread information and zoom information.

When the object position information and the spread information are corrected in this way, the spread information generation unit 112 supplies the metadata of each object containing the corrected object position information and the corrected spread information to the rendering unit 113.

Note that in the case in which zoom information is not supplied, that is, in the case in which zooming is not performed, the processes in step S143 and step S144 are not performed in particular. In other words, the object position information and the spread information are not corrected.

After the process in step S144 is performed, the processes from step S145 to step S147 are performed and the decoding process ends, but since these processes are similar to the processes from step S55 to step S57 in Fig. 5, a description is omitted.

As above, the decoding device 101 corrects the object position information and the spread information about each object, and performs rendering.

With this arrangement, appropriate object position information and spread information can be obtained easily, and content reproduction that feels more realistic can be achieved.

Additionally, the third embodiment in the foregoing may also be combined with the first embodiment or the second embodiment.

For example, in the case of combining the second embodiment and the third embodiment, after the process in step S113 is performed as part of the decoding process described with reference to Fig. 8, the processes in step S143 and step S144 of Fig. 12 are performed, and after that, the processes from steps S114 to S116 are performed.

By configuring the processes in this way, appropriate spread information according to the zoom information can be obtained easily, even when there are frames lacking spread information.

<Exemplary configuration of computer>

Incidentally, the above-described series of processes may be performed by hardware or may be performed by software. In the case where the series of processes is performed by software, a program forming the software is installed into a computer. Here, examples of the computer include a computer that is incorporated in dedicated hardware and a general-purpose personal computer that can perform various types of function by installing various types of programs.

FIG. 13 is a block diagram illustrating a configuration example of the hardware of a computer that performs the above-described series of processes with a program.

In the computer, a central processing unit (CPU) 501, a read only memory (ROM) 502, and a random access memory (RAM) 503 are mutually connected by a bus 504.

Further, an input/output interface 505 is connected to the bus 504. Connected to the input/output interface 505 are an input unit 506, an output unit 507, a recording unit 508, a communication unit 509, and a drive 510.

The input unit 506 includes a keyboard, a mouse, a microphone, an image sensor, and the like. The output unit 507 includes a display, a speaker, and the like. The recording unit 508 includes a hard disk, a nonvolatile memory, and the like. The communication unit 509 includes a network interface, and the like. The drive 510 drives a removable recording medium 511 such as a magnetic disk, an optical disc, a magneto-optical disk, and a semiconductor memory.

In the computer configured as described above, the CPU 501 loads a program that is recorded, for example, in the recording unit 508 onto the RAM 503 via the input/output interface 505 and the bus 504, and executes the program, thereby performing the above-described series of processes.

For example, programs to be executed by the computer (CPU 501) can be recorded and provided in the removable recording medium 511, which is a packaged medium or the like. In addition, programs can be provided via a wired or wireless transmission medium such as a local area network, the Internet, and digital satellite broadcasting.

In the computer, by mounting the removable recording medium 511 onto the drive 510, programs can be installed into the recording unit 508 via the input/output interface 505. In addition, programs can also be received by the communication unit 509 via a wired or wireless transmission medium, and installed into the recording unit 508. In addition, programs can be installed in advance into the ROM 502 or the recording unit 508.

Note that a program executed by the computer may be a program in which processes are chronologically carried out in a time series in the order described herein or may be a program in which processes are carried out in parallel or at necessary timing, such as when the processes are called.

In addition, embodiments of the present technology are not limited to the above-described embodiments, and various alterations may occur insofar as they are within the scope of the present technology.

For example, the present technology can adopt a configuration of cloud computing, in which a plurality of devices shares a single function via a network and performs processes in collaboration.

Furthermore, each step in the above-described flowcharts can be executed by a single device or shared and executed by a plurality of devices.

In addition, in the case where a single step includes a plurality of processes, the plurality of processes included in the single step can be executed by a single device or shared and executed by a plurality of devices.

REFERENCE SIGNS LIST

11 Encoding device
22 Object audio encoding unit
23 Metadata input unit
24 Spread information generation unit
101 Decoding device
111 Unpacking/decoding unit
112 Spread information generation unit
113 Rendering unit
161 Position information correction unit
162 Spread information correction unit

## Claims

1. A signal processing device comprising:
a spread information generation unit configured to generate spread information in a frame to be processed of an audio object, on a basis of object position information in the frame to be processed of the audio object and any of spread information in an other frame different from the frame to be processed of the audio object, zoom information, and size information about the audio object.

2. The signal processing device according to claim 1, wherein
the spread information generation unit generates the spread information in the frame to be processed on a basis of the spread information in the other frame of the audio object and the object position information in the frame to be processed as well as in the other frame of the audio object.

3. The signal processing device according to claim 2, wherein
the object position information is a distance from a reference position to the audio object.

4. The signal processing device according to claim 3, wherein
the spread information generation unit generates an inverse tangent of a product of a ratio of the distance in the frame to be processed and the distance in the other frame, and a tangent of the spread information in the other frame, as the spread information in the frame to be processed.

5. The signal processing device according to claim 1, wherein
the spread information generation unit generates the spread information in the frame to be processed of the audio object after zooming on a basis of the zoom information and the spread information in the frame to be processed of the audio object.

6. The signal processing device according to claim 5, wherein
the spread information generation unit generates the spread information in the frame to be processed of the audio object after zooming on a basis of position and size relationships between a virtual screen before zooming and a virtual screen after zooming determined by the zoom information.

7. The signal processing device according to claim 1, wherein
the spread information generation unit generates the spread information in the frame to be processed on a basis of the size information and the object position information in the frame to be processed of the audio object.

8. The signal processing device according to claim 7, wherein
the size information is a distance from a center to a shell of the audio object.

9. The signal processing device according to claim 8, wherein
the object position information is a distance from a reference position to the audio object.

10. The signal processing device according to claim 9, wherein
the spread information generation unit generates an inverse tangent of a ratio of the size information and the object position information in the frame to be processed as the spread information in the frame to be processed.

11. A signal processing method comprising:

generating spread information in a frame to be processed of an audio object, on a basis of object position information in the frame to be processed of the audio object and any of spread information in an other frame different from the frame to be processed of the audio object, zoom information, and size information about the audio object.

**12.** A program causing a computer to execute a process comprising:
a step of generating spread information in a frame to be processed of an audio object, on a basis of object position information in the frame to be processed of the audio object and any of spread information in an other frame different from the frame to be processed of the audio object, zoom information, and size information about the audio object.

FIG. 1

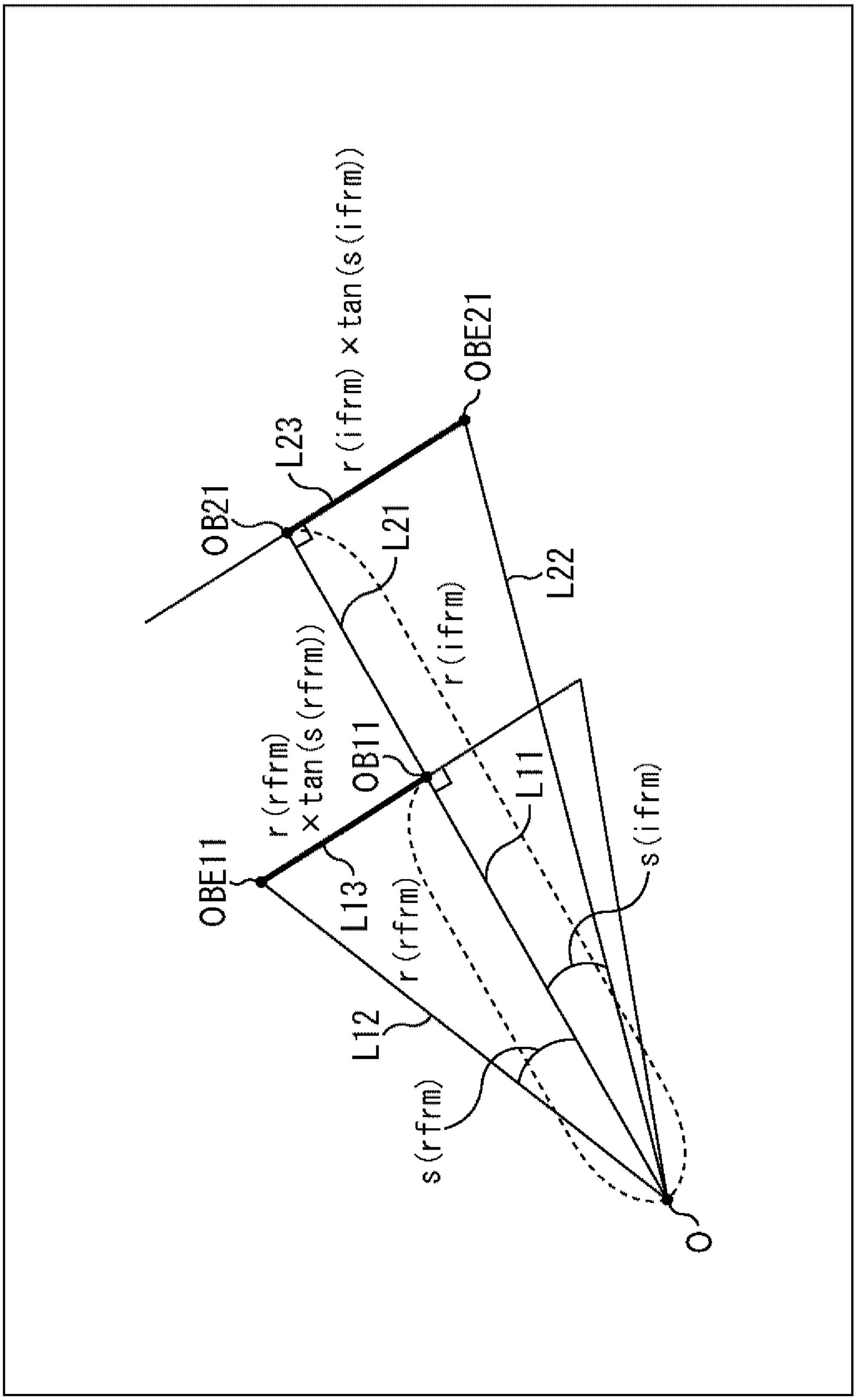
r(ifrm)×tan(s(ifrm))
OBE21
L23
OB21
L21
L22
r(ifrm)
r(rfrm)
×tan(s(rfrm))
OB11
L11
OBE11
L13
s(ifrm)
r(rfrm)
L12
s(rfrm)
O

FIG. 2

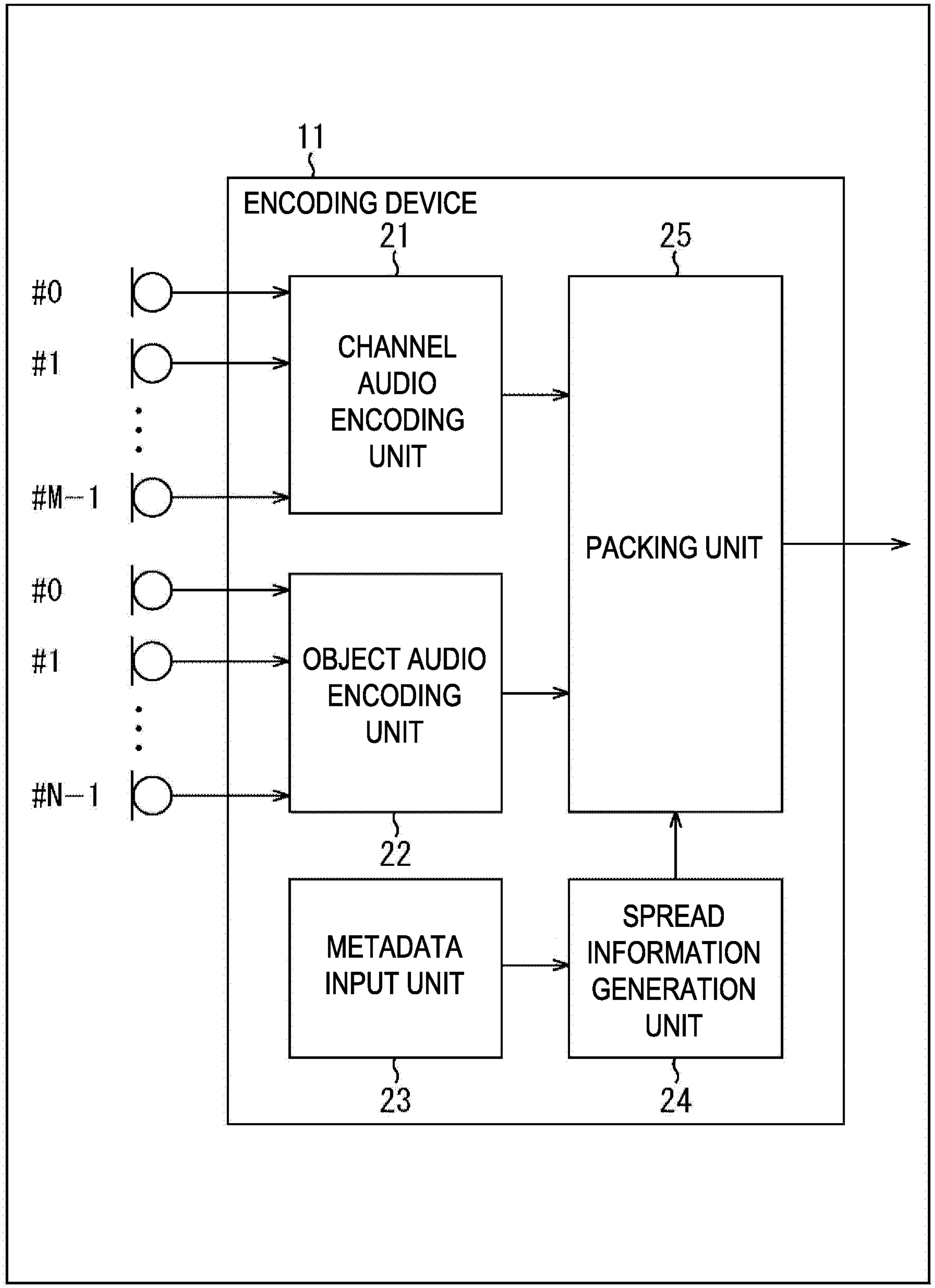
11
ENCODING DEVICE
21
25
#0
#1
#M−1
CHANNEL AUDIO ENCODING UNIT
PACKING UNIT
#0
#1
#N−1
OBJECT AUDIO ENCODING UNIT
22
METADATA INPUT UNIT
SPREAD INFORMATION GENERATION UNIT
23
24

FIG. 3

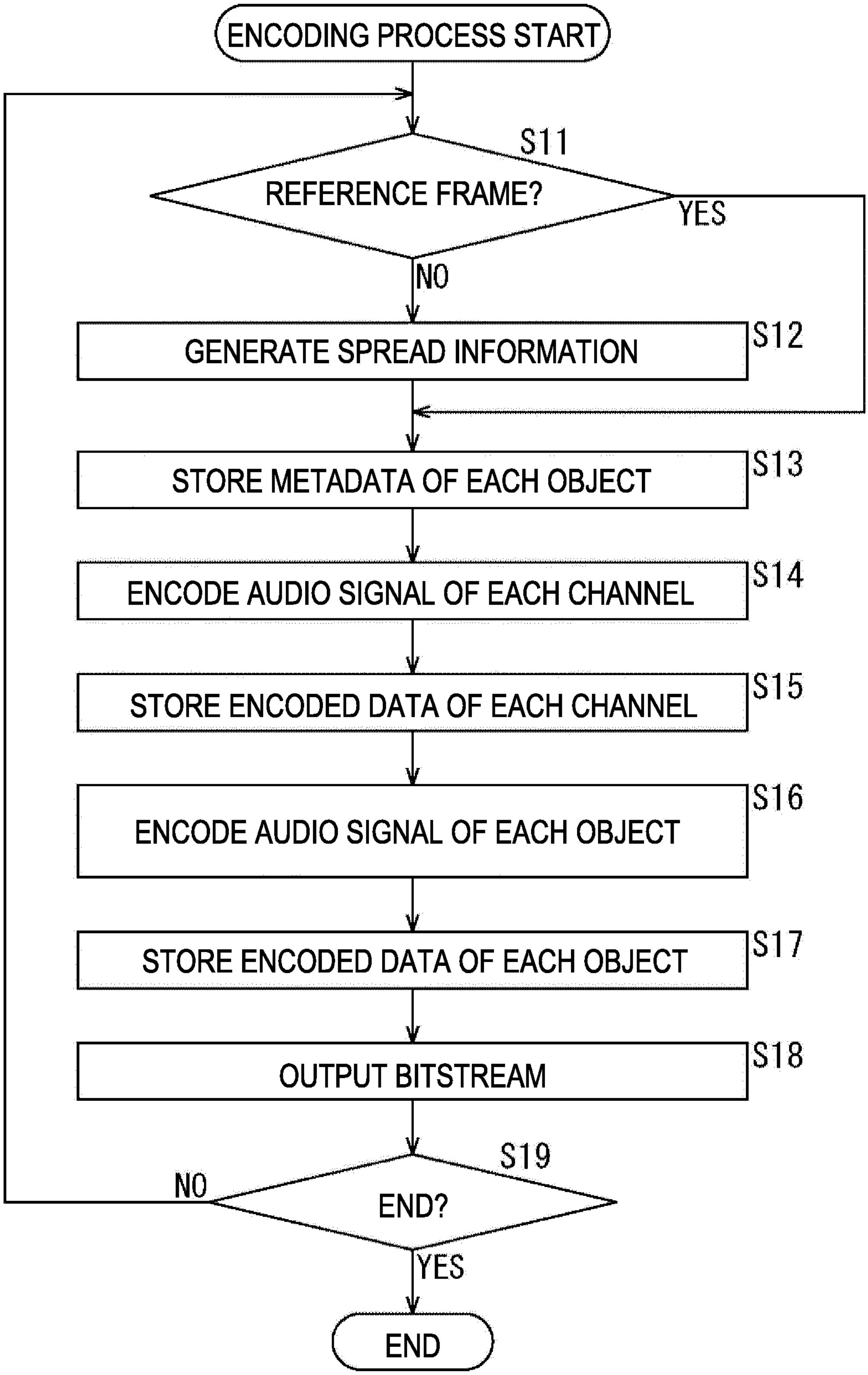
ENCODING PROCESS START
S11
REFERENCE FRAME?
YES
NO
GENERATE SPREAD INFORMATION
S12
STORE METADATA OF EACH OBJECT
S13
ENCODE AUDIO SIGNAL OF EACH CHANNEL
S14
STORE ENCODED DATA OF EACH CHANNEL
S15
ENCODE AUDIO SIGNAL OF EACH OBJECT
S16
STORE ENCODED DATA OF EACH OBJECT
S17
OUTPUT BITSTREAM
S18
S19
NO
END?
YES
END

FIG. 4

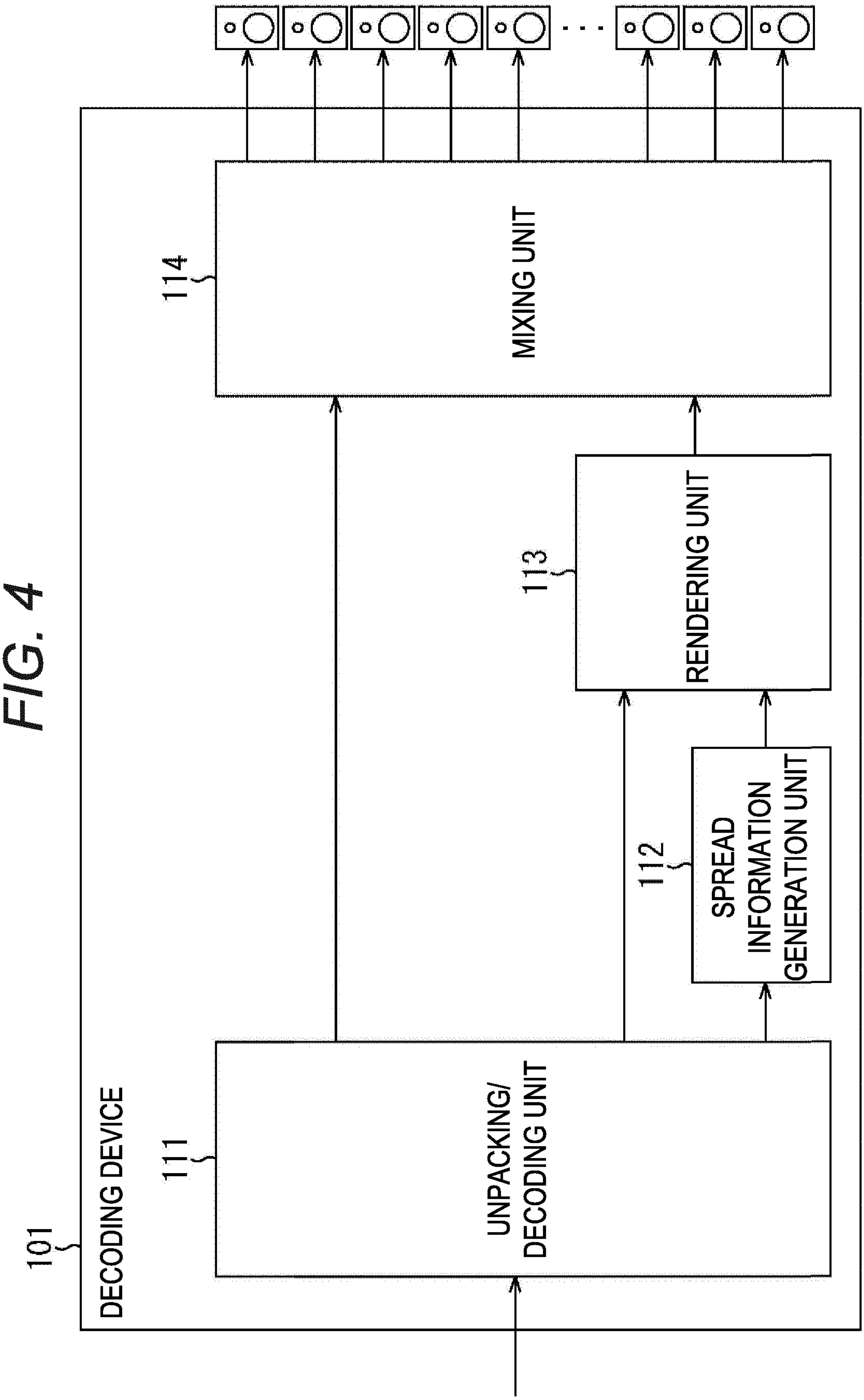
101
DECODING DEVICE
111
UNPACKING/
DECODING UNIT
112
SPREAD
INFORMATION
GENERATION UNIT
113
RENDERING UNIT
114
MIXING UNIT

FIG. 5

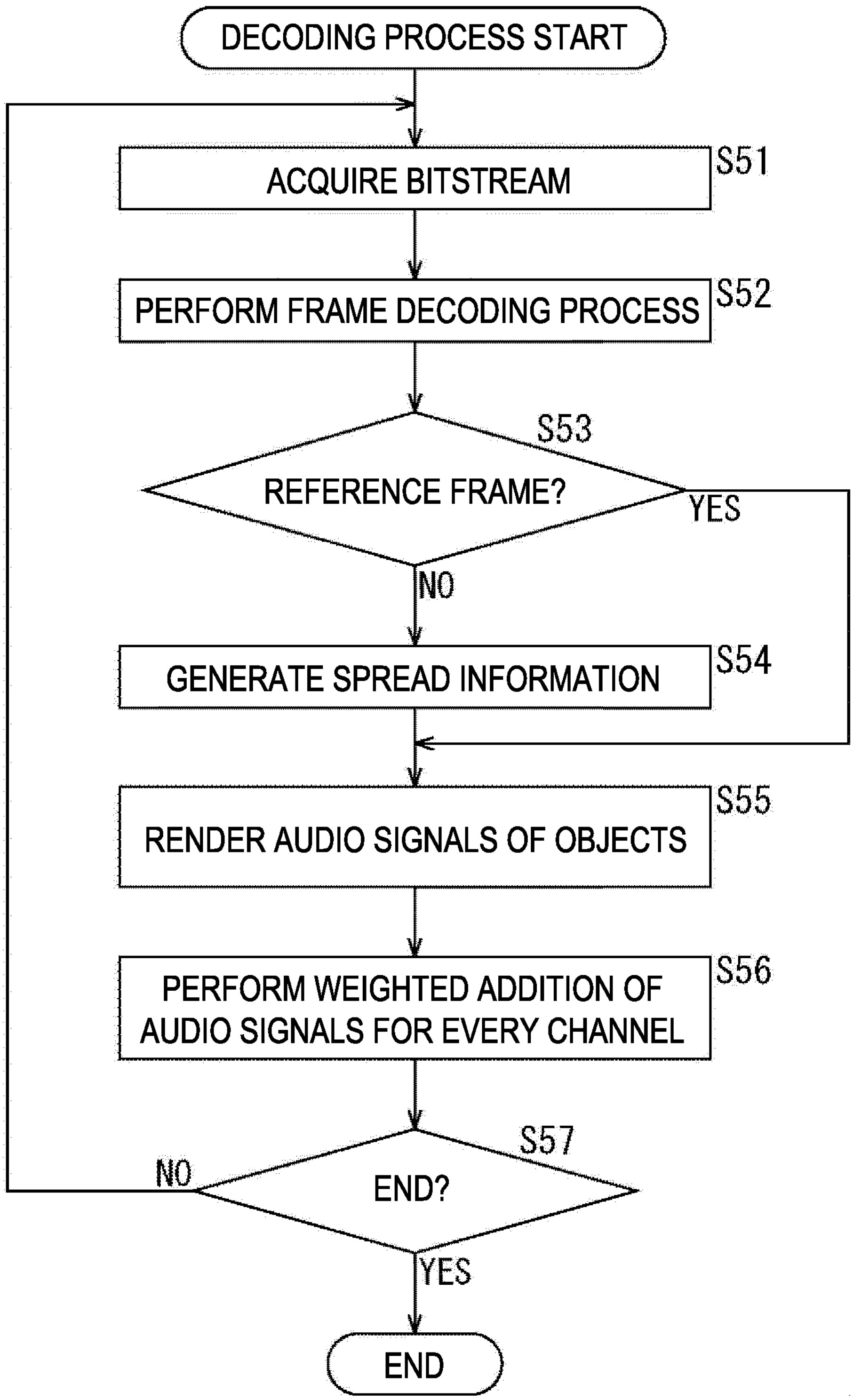
DECODING PROCESS START
ACQUIRE BITSTREAM
S51
PERFORM FRAME DECODING PROCESS
S52
REFERENCE FRAME?
S53
YES
NO
GENERATE SPREAD INFORMATION
S54
RENDER AUDIO SIGNALS OF OBJECTS
S55
PERFORM WEIGHTED ADDITION OF AUDIO SIGNALS FOR EVERY CHANNEL
S56
END?
S57
NO
YES
END

FIG. 6

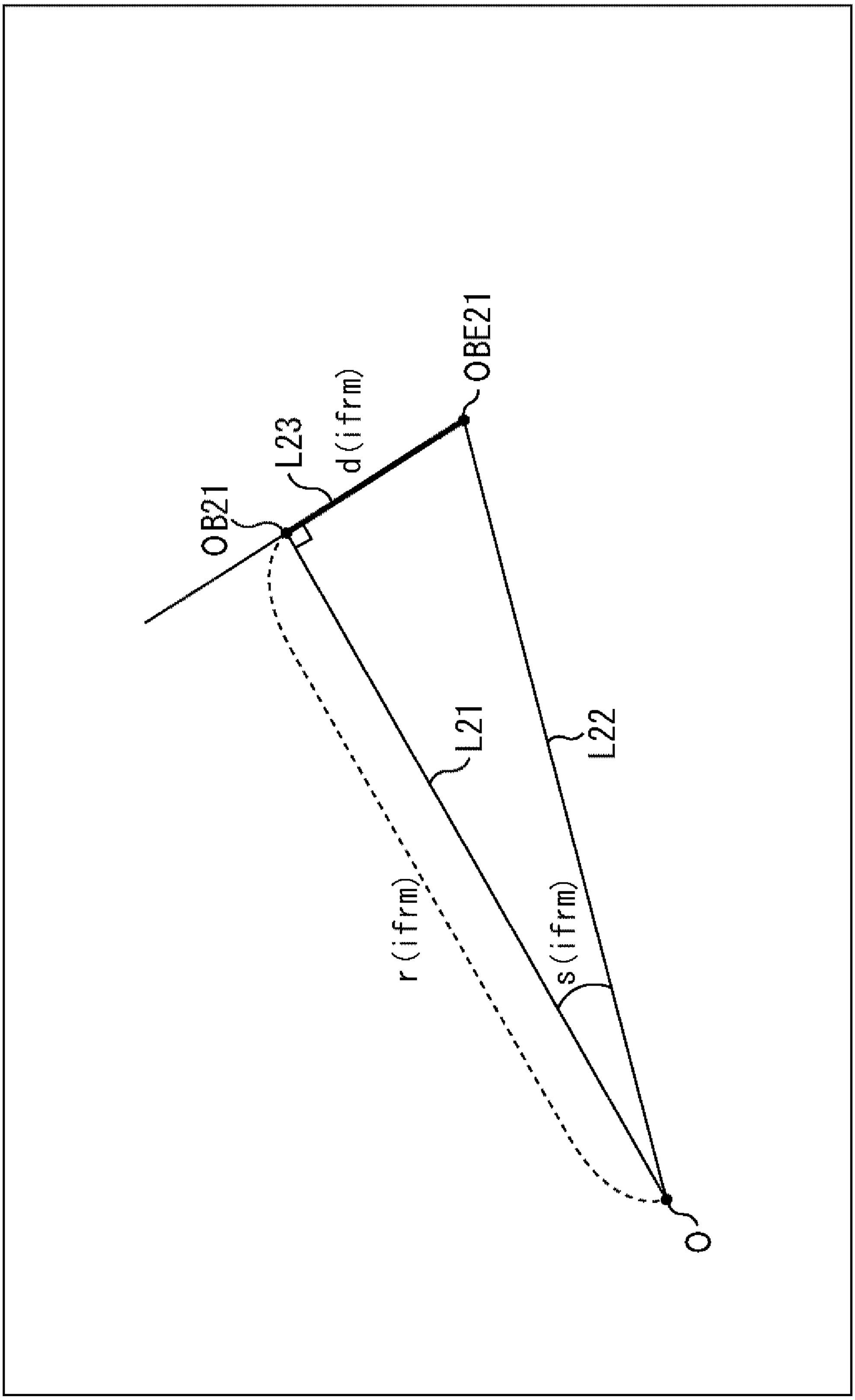

FIG. 7

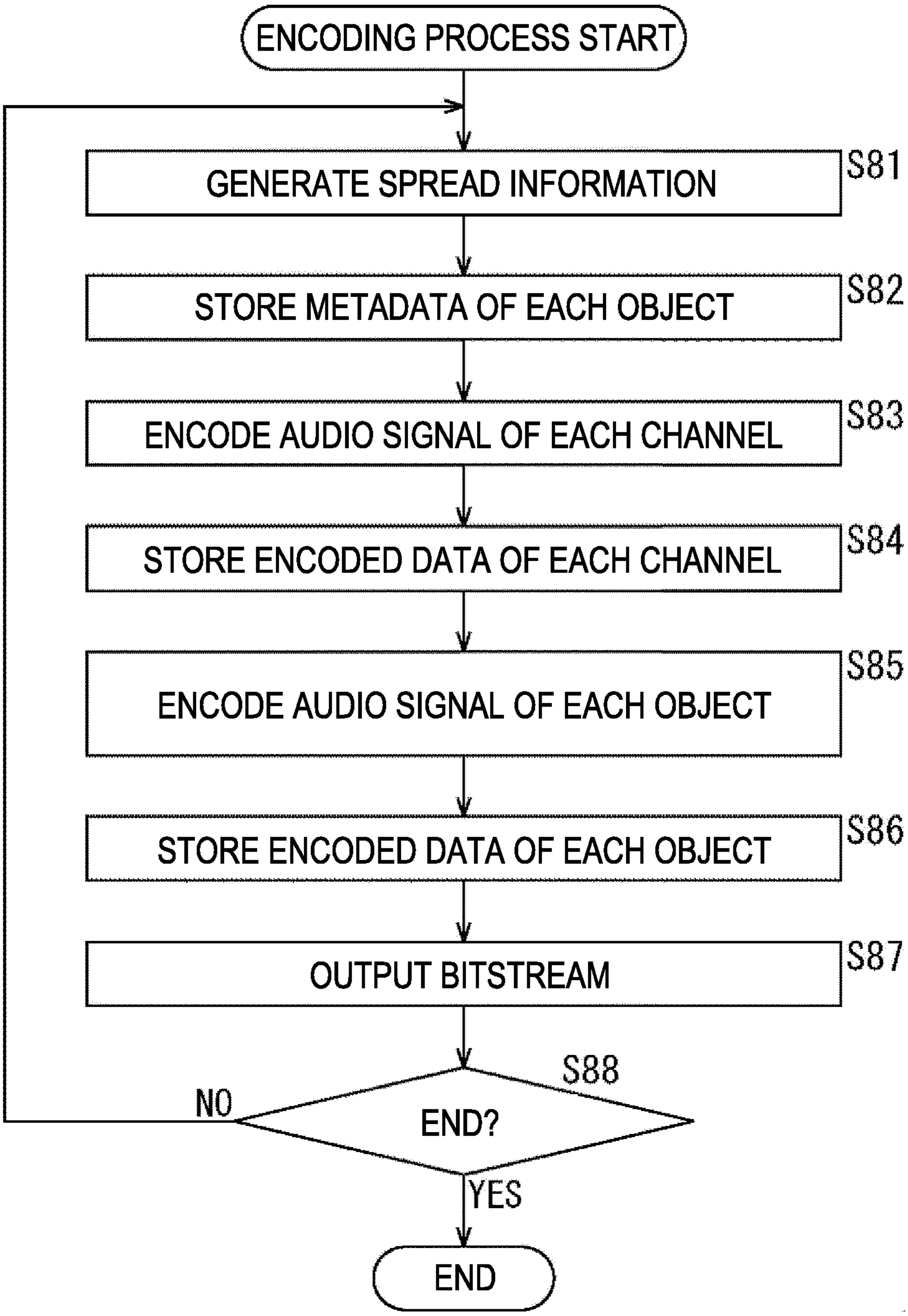
ENCODING PROCESS START
GENERATE SPREAD INFORMATION
S81
STORE METADATA OF EACH OBJECT
S82
ENCODE AUDIO SIGNAL OF EACH CHANNEL
S83
STORE ENCODED DATA OF EACH CHANNEL
S84
ENCODE AUDIO SIGNAL OF EACH OBJECT
S85
STORE ENCODED DATA OF EACH OBJECT
S86
OUTPUT BITSTREAM
S87
S88
END?
NO
YES
END

FIG. 8

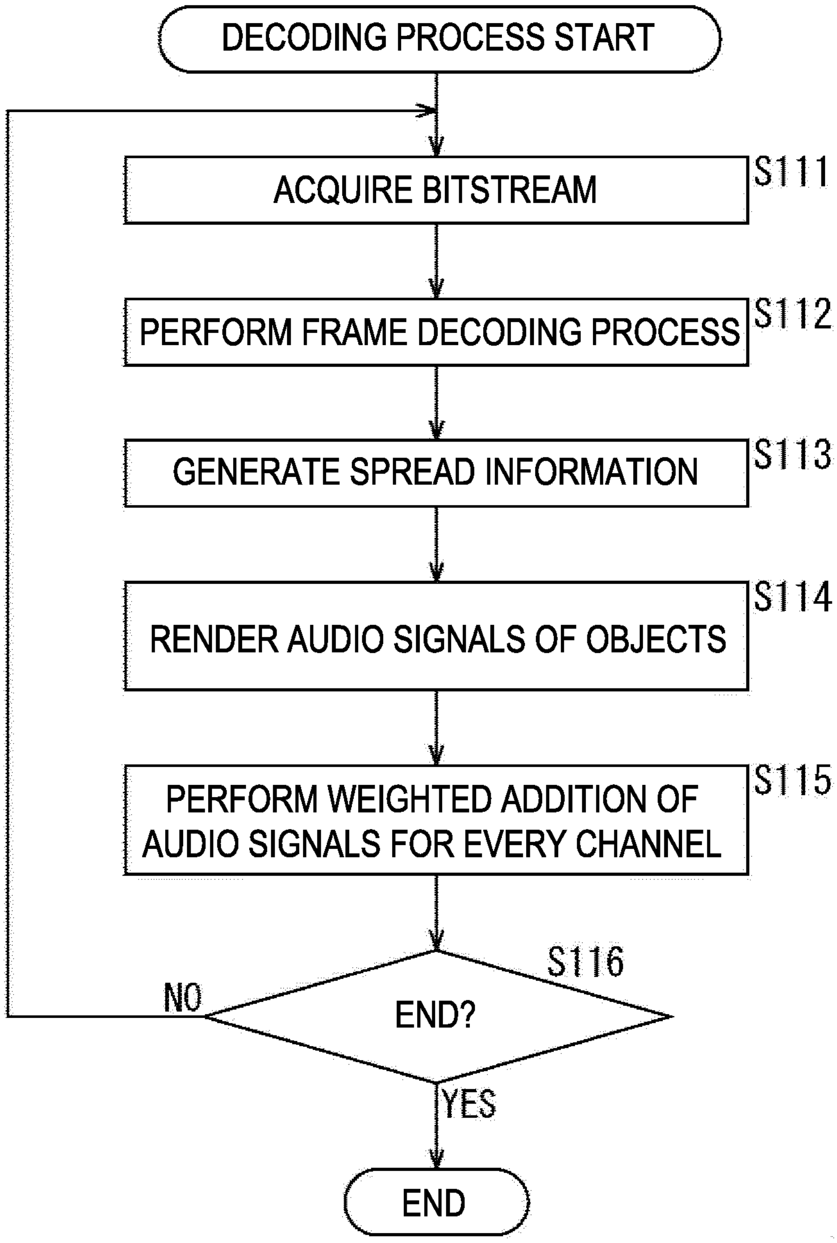
DECODING PROCESS START
ACQUIRE BITSTREAM
S111
PERFORM FRAME DECODING PROCESS
S112
GENERATE SPREAD INFORMATION
S113
RENDER AUDIO SIGNALS OF OBJECTS
S114
PERFORM WEIGHTED ADDITION OF AUDIO SIGNALS FOR EVERY CHANNEL
S115
END?
S116
NO
YES
END

FIG. 9

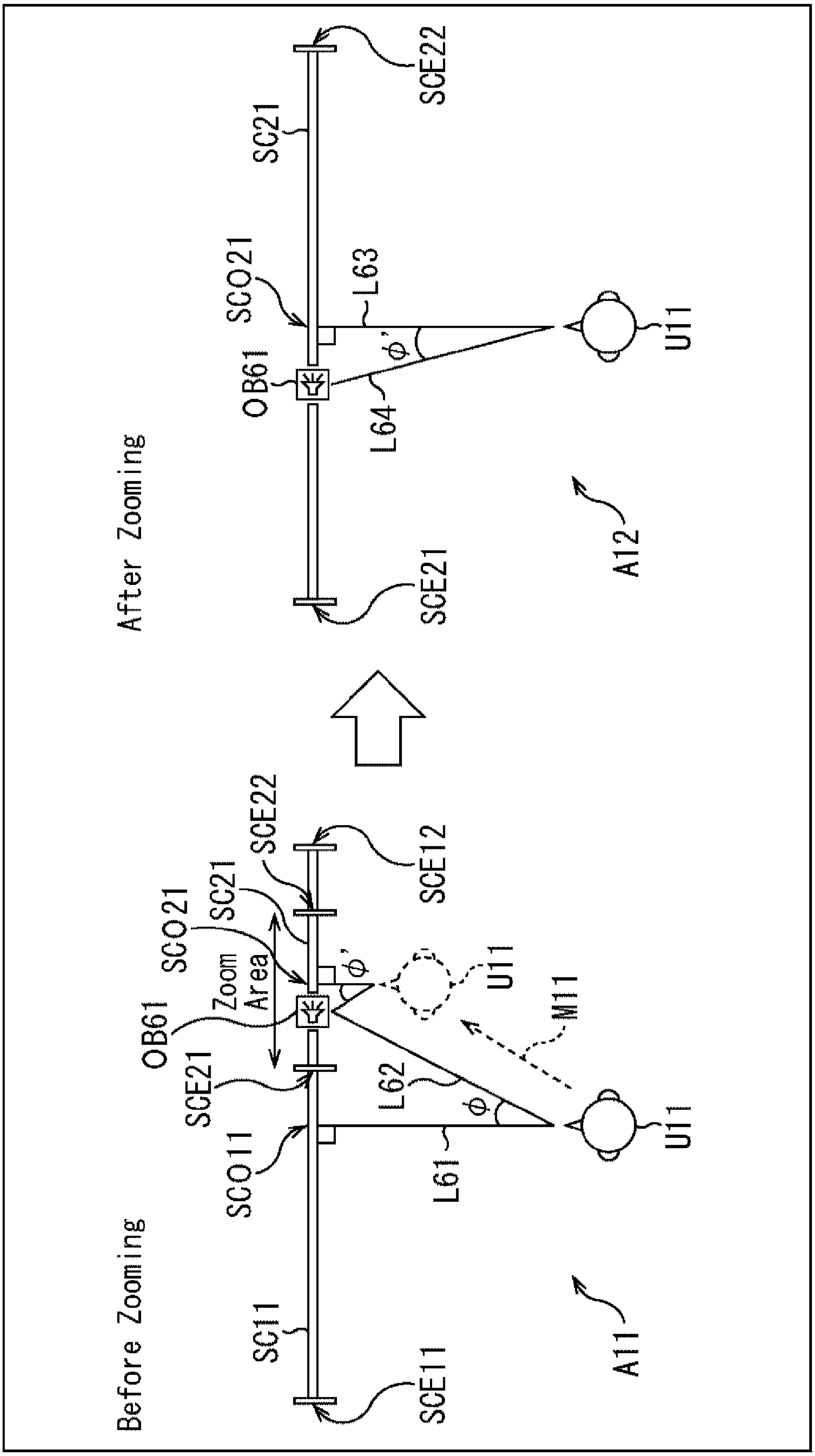
Before Zooming
After Zooming
SC11
SCE11
SCO11
SCE21
OB61
Zoom Area
SCO21
SC21
SCE22
SCE12
L61
L62
U11
M11
A11
A12
L63
L64
SCE21
SCE22
SC21
SCO21
OB61
U11

FIG. 10

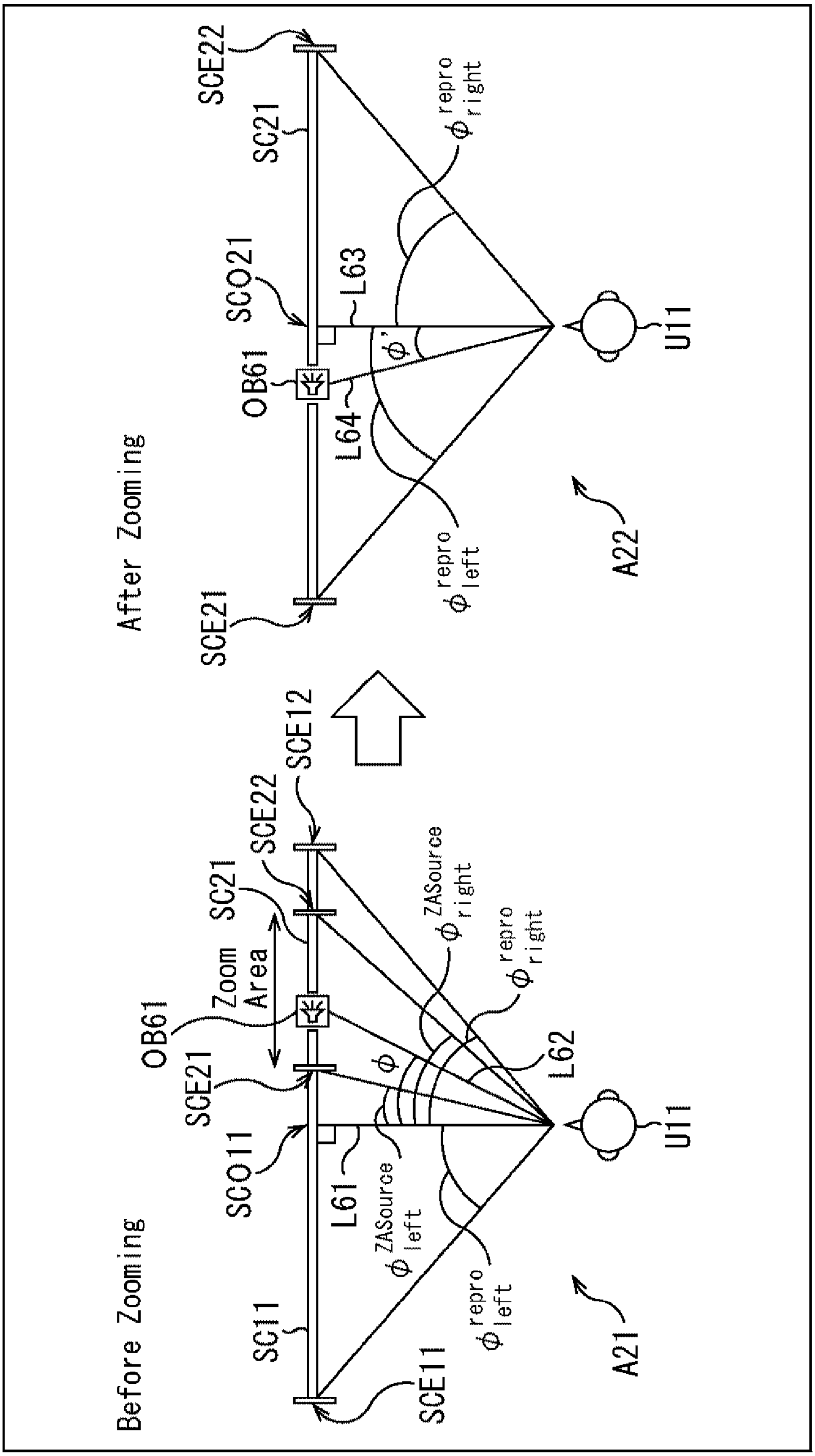
Before Zooming
After Zooming
Zoom Area
SC11
SCE11
SCO11
L61
SCE21
OB61
SC21
SCE22
SCE12
L62
U11
A21
SCE21
L64
OB61
SCO21
L63
SC21
SCE22
U11
A22

FIG. 11

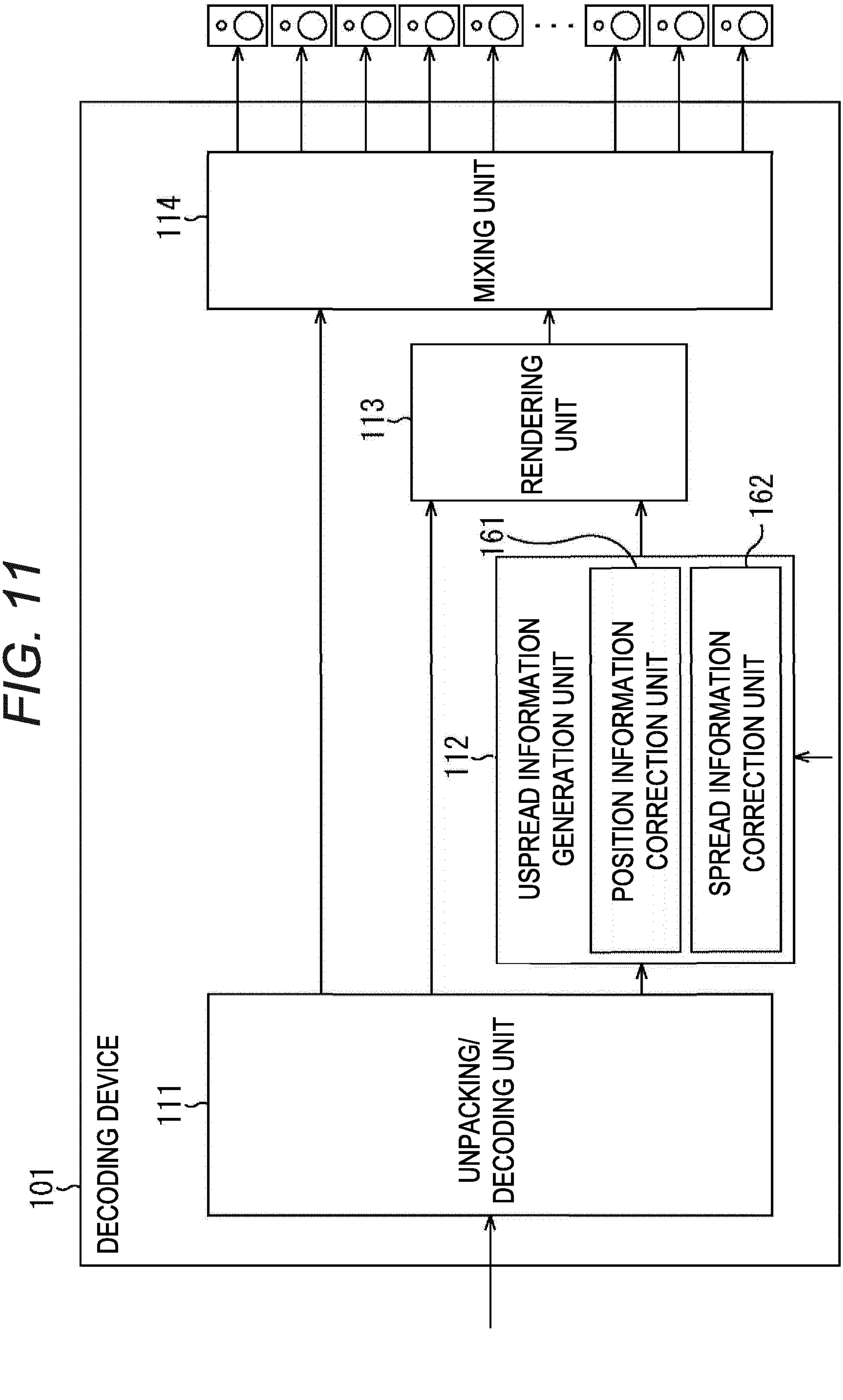
101
DECODING DEVICE
111
UNPACKING/
DECODING UNIT
112
USPREAD INFORMATION
GENERATION UNIT
161
POSITION INFORMATION
CORRECTION UNIT
162
SPREAD INFORMATION
CORRECTION UNIT
113
RENDERING
UNIT
114
MIXING UNIT

FIG. 12

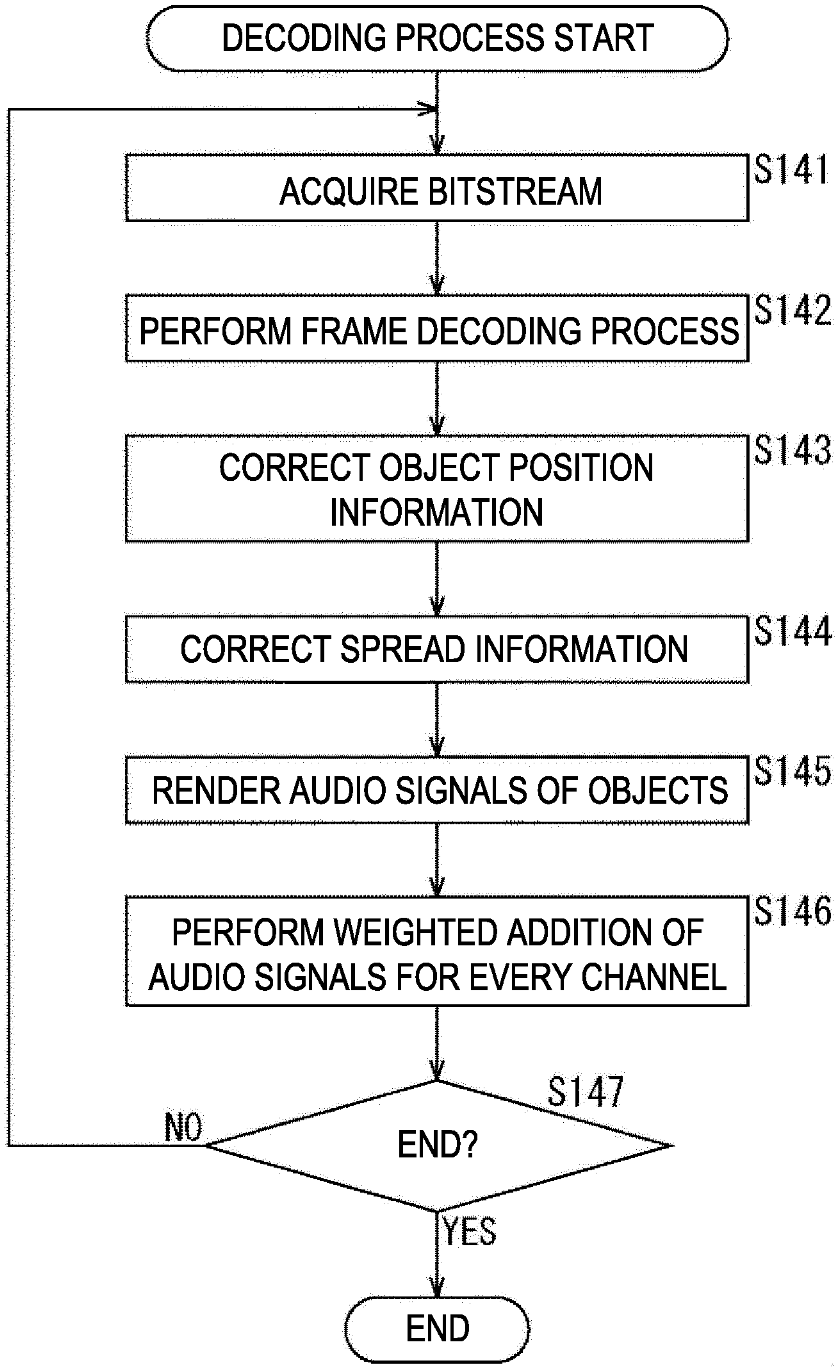
DECODING PROCESS START
ACQUIRE BITSTREAM
S141
PERFORM FRAME DECODING PROCESS
S142
CORRECT OBJECT POSITION INFORMATION
S143
CORRECT SPREAD INFORMATION
S144
RENDER AUDIO SIGNALS OF OBJECTS
S145
PERFORM WEIGHTED ADDITION OF AUDIO SIGNALS FOR EVERY CHANNEL
S146
END?
S147
NO
YES
END

FIG. 13

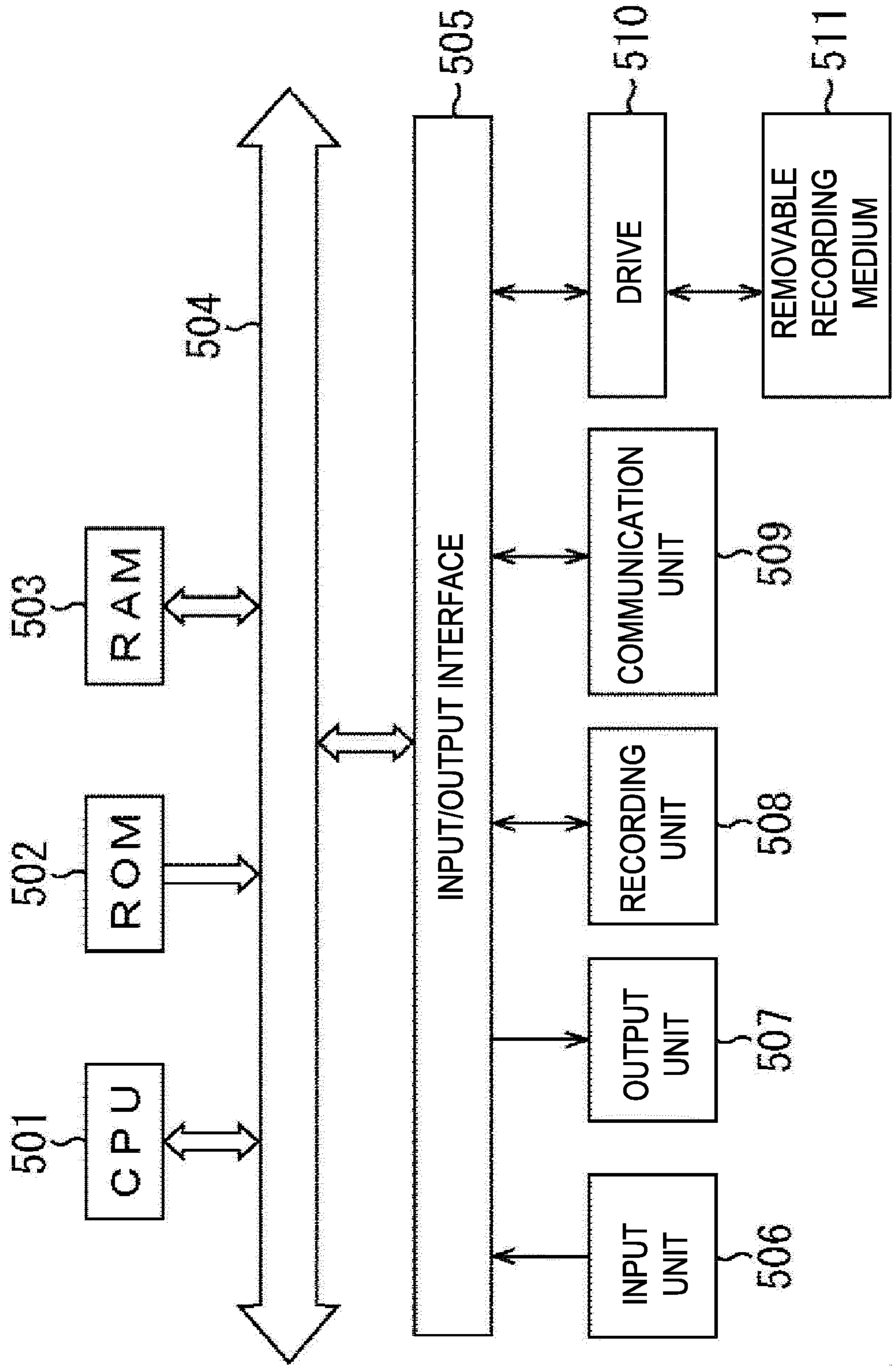
501
CPU
502
ROM
503
RAM
504
505
INPUT/OUTPUT INTERFACE
INPUT UNIT
506
OUTPUT UNIT
507
RECORDING UNIT
508
COMMUNICATION UNIT
509
DRIVE
510
REMOVABLE RECORDING MEDIUM
511

## INTERNATIONAL SEARCH REPORT

International application No. PCT/JP2018/015158

**A. CLASSIFICATION OF SUBJECT MATTER**

Int.Cl. H04S7/00(2006.01)i, G10L19/00(2013.01)i, G10L19/008(2013.01)i, H04R3/00(2006.01)i

According to International Patent Classification (IPC) or to both national classification and IPC

**B. FIELDS SEARCHED**

Minimum documentation searched (classification system followed by classification symbols)
Int.Cl. H04S7/00, G10L19/00, G10L19/008, H04R3/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2016/208406 A1 (SONY CORP.) 29 December 2016, paragraphs [0031]-[0307], fig. 1-13 & EP 3319342 A1, paragraphs [0031]-[0298], fig. 1-13 | 1-12 |
| A | JP 2017-055149 A (SONY CORP.) 16 March 2017, paragraphs [0074]-[0115], fig. 4, 5 & WO 2017/043309 A1 | 1-12 |
| P,X | WO 2017/208820 A1 (SONY CORP.) 07 December 2017, paragraphs [0204]-[0237], fig. 11-13 (Family: none) | 1,7-9,11,12 |

☐ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 06 June 2018 (06.06.2018) | 19 June 2018 (19.06.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)